# EUROPÄISCHE PATENTSCHRIFT

(11) **EP 4 253 753 B1**
(45) Veröffentlichungstag und Bekanntmachung des Hinweises auf die Patenterteilung: **28.10.2026**
(21) Anmeldenummer: 22166371.9
(22) Anmeldetag: 01.04.2022
(51) Int. Cl.: F03D 17/00, F03D 7/02, F03D 7/04

(54) **VERFAHREN ZUM ERFASSEN EINER BLATTFEHLSTELLUNG EINES ROTORBLATTES EINES ROTORS EINER WINDENERGIEANLAGE**
METHOD FOR DETECTING THE INCORRECT LOCATION OF A ROTOR BLADE OF A WIND POWER FACILITY
PROCÉDÉ DE DÉTECTION D'UN MAUVAIS RÉGLAGE D'UNE PALE DE ROTOR D'ÉOLIENNE

(43) Veröffentlichungstag der Anmeldung: 04.10.2023
(73) Patentinhaber: Wobben Properties GmbH, 26607 Aurich (DE)
(72) Erfinder: BUNGE, Frank, 67063 Ludwigshafen (DE)
(74) Vertreter: Eisenführ Speiser

(56) Entgegenhaltungen:
- US-A1- 2011 311 359
- US-A1- 2012 230 820

## Beschreibung

Die vorliegende Erfindung betrifft ein Verfahren zum Erfassen wenigstens einer Blattfehlstellung eines Rotorblattes eines Rotors einer Windenergieanlage. Außerdem betrifft die vorliegende Erfindung eine entsprechende Windenergieanlage.

Windenergieanlagen sind bekannt, sie erzeugen elektrischen Strom aus Wind. Dazu ist ein aerodynamischer Rotor mit Rotorblättern vorgesehen, der über die Rotorblätter vom Wind angetrieben wird. Moderne Windenergieanlagen weisen dabei Rotorblätter auf, die in ihrem Blattwinkel verstellbar sind. Damit kann zu jeder Windsituation ein optimaler Blattwinkel gefunden werden, und insbesondere können die Rotorblätter bei hohen Windgeschwindigkeiten ganz oder teilweise aus dem Wind gedreht werden, um dadurch eine zu hohe Belastung zu vermeiden.

Werden die Rotorblätter ungleichmäßig verstellt, weisen sie untereinander also unterschiedliche Blattwinkel auf, kann sich eine ungleichmäßige Last auf den Rotor einstellen. Das kann auch als aerodynamische Unwucht bezeichnet werden. Ein Blatt hat dann bspw. gegenüber den anderen Blättern eine höhere oder geringere Last und diese höhere oder geringere Last läuft mit Drehung des Rotors um. Es ergibt sich also eine auf den Rotor wirkende unsymmetrische, umlaufende Last. Besonders kann das dazu führen, dass eine Schublast durch den Wind nicht mehr rein axial auf die Rotorachse wirkt und damit auch nicht mehr drehsymmetrisch ist.

Durch Unwuchten, die Masse- und aerodynamische Unwuchten betreffen können, werden also Lasten an den Windenergieanlagen erzeugt. Eine aerodynamische Unwucht entsteht somit, wenn ein Blatt eine dauerhafte Blattwinkelfehlstellung aufweist, die auch als Pitchfehlstellung bezeichnet werden kann, sodass sich die aerodynamischen Kräfte bei diesem Blatt von den anderen Blättern unterscheiden.

Geringe Unwuchten können auftreten und müssen von der Windenergieanlage, die vereinfachend auch als Anlage bezeichnet wird, toleriert werden. Dafür können spezifizierte Unwuchten vorgesehen sein, die noch zulässig sind und eingehalten werden müssen, also nicht überschritten werden dürfen. Es kommt dabei in Betracht, dass eine Windenergieanlage eine spezifizierte Unwucht nicht einhält und dann nachgebessert, insbesondere ausgewuchtet werden muss. Ein solches Nachbessern bzw. Auswuchten kann zu hohen Kosten führen.

Grundsätzlich kann so vorgegangen werden, dass, sobald eine Unwucht quantifiziert wurde, ihre Höhe also festgestellt wurde, und lokalisiert wurde, ihr Ort also festgestellt wurde, diese ausgeglichen werden kann, um die Windenergieanlage dadurch auszuwuchten. Im Falle einer Pitchfehlstellung, die insbesondere eine aerodynamische Unwucht bedingt, kann der Blattwinkel, der auch als Pitchwinkel bezeichnet werden kann, des betroffenen Rotorblattes um einen Offset korrigiert werden. Ein Rotorblatt wird vereinfachend und synonym auch als Blatt bezeichnet.

Eine aerodynamische Unwucht, d.h. eine Pitchfehlstellung eines oder mehrerer Blätter, erzeugt in einem oder mehreren Blättern unterschiedliche Biegemomente, woraus eine periodische Drehzahländerung und auch periodische Lasten am Turm hervorgerufen werden. Zur Erfassung solcher aerodynamischen Lasten könnten daher solche Biegemomente, periodische Drehzahländerungen oder periodische Lasten ausgewertet werden. Turmschwingungen und Drehzahländerungen werden jedoch u.a. auch durch die Anlagenregelung oder eine Massenunwucht hervorgerufen und beeinflusst. Eine solche Erfassung kann somit schwierig und kompliziert sein und daher hohe Kosten verursachen.

Das Dokument US 2012/0230820 A1 betrifft ein Verfahren zum Erfassen einer Blattwinkelunwucht eines Rotorblattsystems einer Windkraftanlage, wobei die Rotordrehachse um eine Gierachse quer zur Rotordrehachse giert, und das Verfahren ein Lastsignal berücksichtigt, das eine Last aufgrund des Gierens anzeigt.

Der vorliegenden Erfindung liegt somit die Aufgabe zugrunde, zumindest eines der oben genannten Probleme zu adressieren. Insbesondere soll eine Lösung vorgeschlagen werden, aerodynamische Unwuchten mit möglichst wenig Kosten bzw. möglichst wenig Mehrkosten zu erfassen. Zumindest soll zu bisher bekannten Lösungen eine Alternative vorgeschlagen werden.

Erfindungsgemäß wird ein Verfahren gemäß Anspruch 1 vorgeschlagen. Das Verfahren betrifft somit das Erfassen wenigstens einer Blattfehlstellung eines Rotorblattes eines Rotors einer Windenergieanlage mit mehreren in ihrem Blattwinkel verstellbaren Rotorblättern. Die Blattfehlstellung beschreibt eine Blattwinkelabweichung eines erfassten Blattwinkels des Rotorblattes von einem Referenzblattwinkel (oder umgekehrt). Der Referenzblattwinkel ist im Idealfall der tatsächliche Blattwinkel. Der tatsächliche Blattwinkel ist somit die Summe aus erfasstem Blattwinkel und der Blattfehlstellung. Der erfasste Blattwinkel ist ein Blattwinkel, den ein entsprechender Encoder, oder anderer Sensor, als Blattwinkel ausgibt. Es soll somit die Blattfehlstellung quantitativ erfasst werden, um den tatsächlichen Blattwinkel berechnen zu können, bzw. um den erfassten Blattwinkel zu korrigieren.

Die Blattfehlstellung kann auch synonym als Fehlwinkel oder Blattfehlwinkel bezeichnet werden. Ein solcher Referenzblattwinkel ist zwar im Idealfall der tatsächliche Blattwinkel, es wurde aber erkannt, dass es in manchen Fällen gar nicht auf die Abweichung zum tatsächlichen Blattwinkel ankommt, sondern auf eine Abweichung der Blattwinkel der Rotorblätter untereinander, denn dadurch kann eine aerodynamische Unwucht des Rotors entstehen. Sind also bspw. alle drei Rotorblätter gleichmäßig, also mit demselben Vorzeichen, um 0,5° verstellt, ergibt sich keine aerodynamische Unwucht. Der Referenzwinkel kann dann um diese beispielhaften 0,5° von dem tatsächlichen Blattwinkel abweichen. Der Referenzblattwinkel kann dann ein mittlerer Blattwinkel aller Rotorblätter sein, besonders dann, wenn ein für alle Rotorblätter gleich vorgegebener Sollwinkel vorgegeben wird, der auch als kollektiver Blattwinkel bezeichnet wird. Davon unabhängig kann aber meist angenommen werden, dass der Referenzblattwinkel jeweils dem tatsächlichen Blattwinkel entspricht.

Weiter ist vorgesehen, dass die Windenergieanlage eine Gondel mit dem Rotor und eine Azimutverstelleinrichtung aufweist. Diese Azimutverstellrichtung ist dazu vorgesehen, die Gondel in einer einen Azimutwinkel aufweisenden Azimutausrichtung zu verstellen. Insbesondere ist die Azimutverstelleinrichtung dazu vorgesehen, den Rotor zum Wind auszurichten. Das erfolgt üblicherweise so, dass die Gondel, die den Rotor trägt, entsprechend verstellt wird. Für eine solche Verstellung ist wenigstens ein Azimutverstellmotor vorgesehen, der auch als Azimutmotor bezeichnet werden kann. Die Ausrichtung der Gondel und damit des Rotors kann somit durch den Azimutwinkel beschrieben werden. Der Azimutwinkel quantifiziert also die Azimutausrichtung.

Zur Verstellung der Azimutausrichtung wird der Azimutwinkel mittels der Azimutverstelleinrichtung einem vorgebbaren Azimutsollwinkel nachgeführt. Der Azimutsollwinkel kann bspw. in Abhängigkeit von einer erfassten Windrichtung vorgegeben werden. Im einfachsten Fall entspricht der Azimutsollwinkel der Windrichtung bzw. ist - je nach Definition - dazu um 180° versetzt. Es können aber auch andere Kriterien mit berücksichtigt werden. Insbesondere wird ein Azimutsollwinkel einer veränderten Windrichtung üblicherweise mit einer gewissen Trägheit nachgeführt. Das führt dazu, dass der Azimutsollwinkel ein vergleichsweise stabiler Wert ist, der sich nur langsam verändert.

Verändert sich der Azimutsollwinkel, so wird die Azimutausrichtung dem Azimutwinkel nachgeführt. Ein solches Nachführen kommt aber auch in Betracht, wenn der Azimutsollwinkel unverändert bleibt bzw. seine Veränderung vernachlässigt werden kann, sich aber die Azimutausrichtung durch äußere Einwirkungen verändert. Besonders ein ungleichmäßiges auf den Rotor wirkendes Windfeld kann zu einer Veränderung der Azimutausrichtung führen.

Einer solchen Veränderung der Azimutausrichtung wird auch durch die Azimutverstelleinrichtung entgegengewirkt, die die Azimutausrichtung auf diesen Wert wieder zurückführt.

Weiter wird vorgeschlagen, dass die Blattfehlstellung in Abhängigkeit von einer Azimutbewegung der Gondel erfasst wird. Hier liegt die Erkenntnis zugrunde, dass die aerodynamische Unwucht dazu führen kann, dass die Azimutausrichtung der Gondel verändert wird. Bspw. kann die aerodynamische Unwucht dazu führen, dass ein Rotorblatt aufgrund einer Fehlstellung mehr Schubkraft aus dem Wind aufnimmt, als jeweils die übrigen Rotorblätter. Befindet sich dieses Rotorblatt bei der Drehung des Rotors auf einer ersten Seite, z.B. in 9-Uhr-Stellung, wird auf diese Seite des Rotors in dem Moment ein stärkerer Druck ausgeübt, was zu einer Azimutbewegung der Gondel zu dieser Seite hin führen kann. Der Rotor dreht sich dann weiter und wenn dann dasselbe Rotorblatt in der 3-Uhr-Stellung ist, also auf der anderen Seite, erfährt der Rotor hier, auf dieser anderen Seite, eine höhere aerodynamische Last, also einen höheren Druck. Das kann zur Änderung der Azimutausrichtung der Gondel zu dieser zweiten Seite führen.

Natürlich dreht sich der Rotor kontinuierlich, sodass das Rotorblatt sich kontinuierlich von der 9-Uhr-Stellung in die 3-Uhr-Stellung bewegt und entsprechend nimmt diese erhöhte Last in dem genannten Beispiel auf der einen Seite kontinuierlich ab und dann auf der anderen Seite kontinuierlich zu, bis das Rotorblatt sich von der 9-Uhr- in die 3-Uhr-Stellung gedreht hat. Die fortgesetzte Drehung von der 3-Uhr-Stellung zur 9-Uhr-Stellung führt dann zur kontinuierlichen Abnahme der Last auf dieser zweiten Seite und Zunahme der Last auf der ersten Seite.

Es wurde erkannt, dass aus dieser Azimutbewegung der Gondel die aerodynamische Unwucht des Rotors und damit eine Blattfehlstellung eines Rotorblattes ableitbar ist.

Gemäß einem Aspekt wird vorgeschlagen, dass die Blattfehlstellung in Abhängigkeit von einer Azimutbewegung der Gondel dadurch erfasst wird, dass eine Verstellaktivität der Azimutverstelleinrichtung erfasst wird. Insbesondere weist eine Azimutverstelleinrichtung den wenigstens einen Azimutmotor auf, der nämlich diese Azimutverstellung bewirkt, also als Aktuator für die Azimutverstellung wirkt. Dazu wird vorgeschlagen, dass eine Verstellaktivität des wenigstens einen Azimutmotors der Azimutverstelleinrichtung erfasst wird.

Die Azimutverstelleinrichtung, insbesondere der Azimutmotor, verstellen also die Azimutausrichtung der Gondel, was somit eine Verstellaktivität der Azimutverstelleinrichtung bzw. des wenigstens einen Azimutmotors ist. Diese Verstellaktivität wird durch eine Anlagensteuerung koordiniert. Insbesondere können Sollwerte vorgegeben werden und häufig werden auch Istwerte aufgenommen. Solche Istwerte können bspw. Motormomente, Motordrehzahlen oder Motorströme des Azimutmotors sein. Es kommen aber auch andere Größen der Azimutverstelleinrichtung in Betracht, einschließlich eines Istwertes und/oder eines Sollwertes für die Azimutausrichtung. Als Azimutmotor kommen insbesondere Elektromotoren in Betracht, es können aber auch Hydraulikantriebe vorgesehen sein.

Jedenfalls werden diverse Größen der Azimutverstelleinrichtung und/oder des Azimutmotors durch die Anlagensteuerung vorgegeben und/oder aufgenommen und dadurch kann die Verstellaktivität der Azimuteinstellung bzw. des Azimutmotors gut überwacht und ausgewertet werden.

Besonders wurde hier erkannt, dass das Nachführen der Azimutausrichtung nach dem Azimutsollwinkel durch eine Regelung erfolgt, die den Azimutistwinkel aufnimmt und davon abhängig die Azimutverstelleinrichtung, insbesondere den Azimutmotor ansteuert. Aus dem Ansteuersignal und/oder dem Verhalten des Motors kann somit auf den Einfluss einer aerodynamischen Unwucht auf die Azimutausrichtung der Gondel zurückgeschlossen werden.

Hier wurde auch erkannt, dass nicht nur eine Azimutbewegung erkannt werden kann, sondern dass besonders eine Stellgröße eines Reglers auch Rückschlüsse auf die wirkenden Kräfte zulässt.

Hier wurde ebenfalls erkannt, dass bei Verwendung eines guten bzw. schnellen Reglers in der Azimutverstelleinrichtung nur vergleichsweise geringe Azimutbewegungen auftreten, da sie durch den Regler ausgeregelt werden. In diesem Fall kann eine Beobachtung alleine einer Azimutbewegung ungenau sein und stattdessen besonders die Verwendung einer Stellgröße des Reglers eine höhere Genauigkeit schaffen. Daher wird vorgeschlagen, die Verstellaktivität der Azimutverstelleinrichtung zu erfassen bzw. die Verstellaktivität wenigstens eines Azimutmotors der Azimutverstelleinrichtung zu erfassen.

Gemäß einem Aspekt wird vorgeschlagen, dass die Azimutverstelleinrichtung so ausgebildet ist, dass sie einer Veränderung der Azimutausrichtung der Gondel durch Windeinwirkung durch eine Positionsregelung des Azimutwinkels entgegenwirkt. Insbesondere wird vorgeschlagen, dass eine Azimutverstelleinrichtung verwendet wird, die keine Haltebremse aufweist.

Hier wurde besonders erkannt, dass durch die Positionsregelung der Azimutverstelleinrichtung der Windeinwirkung entgegengetreten, nämlich entgegengeregelt wird. Durch eine solche Positionsregelung wird eine Haltebremse entbehrlich, die eingesetzt werden könnte, um die Gondel in einer Azimutausrichtung zu halten, solange die Windrichtung sich nicht ändert. Entsprechend wird vorgeschlagen, keine Haltebremse vorzusehen. Die Aufgabe der Haltebremse übernimmt dann die Positionsregelung. Wird also die Gondel durch den Wind in ihrer Azimutausrichtung etwas verändert, so ist das möglich, wenn keine Haltebremse vorhanden ist, führt aber dazu, dass die Positionsregelung der Azimutverstelleinrichtung dem entgegenwirkt. Genau hierdurch entstehen die genannten Verstellaktivitäten, die dieser Veränderung der Azimutausrichtung der Gondel durch den Wind entgegenwirken und zur Erkennung der aerodynamischen Unwucht ausgewertet werden können.

Insbesondere erfolgt das Nachführen des Azimutwinkels kontinuierlich. Es wird also kontinuierlich der Istwert des Azimutwinkels erfasst und mit dem Azimutsollwinkel verglichen, um davon abhängig den Azimutwinkel dem Azimutsollwinkel nachzuführen. Der Istwert des Azimutwinkels wird auch vereinfachend hier nur als Azimutwinkel bezeichnet. Das kontinuierliche Nachführen beinhaltet natürlich auch eine Implementierung auf einem digital arbeitenden Prozessrechner, besonders wenn eine Abtastung der Istwerte mit üblichen Abtastraten durchgeführt wird.

Durch dieses kontinuierliche Nachführen liegen somit auch die beschriebenen Signale ständig vor und liefern damit auch einen kontinuierlichen Signalverlauf. Besonders ist wichtig, dass durch das kontinuierliche Nachführen die Verstellaktivität der Azimutverstelleinrichtung die Azimutbewegungen der Gondel wiederspiegelt.

Erfindungsgemäß wird vorgeschlagen, dass zur Erfassung der Blattfehlstellung ein Zustandsbeobachter verwendet wird. Ein solcher Zustandsbeobachter berücksichtigt somit die Azimutbewegung der Gondel, insbesondere die Verstellaktivität der Azimutverstelleinrichtung bzw. des Azimutmotors.

Somit kann ein Modell vorgegeben werden, das die Windenergieanlage in ihrem Verhalten abbildet. Zumindest kann ein Modell vorgesehen sein, das ein relevantes Teilverhalten der Windenergieanlage abbildet, das nämlich den Einfluss einer Blattfehlstellung beinhaltet. Das Modell kann parallel zum Verhalten der Windenergieanlage bzw. parallel zum Teilverhalten der Windenergieanlage arbeiten und über wenigstens eine Ausgangsgröße abgeglichen werden. Dazu kann eine Ausgangsgröße der Windenergieanlage bzw. des betrachteten Teils mit der korrespondierenden Ausgangsgröße des Modells verglichen werden, um in Abhängigkeit von diesem Vergleich das Modell abzugleichen. Die zu beobachtende Größe kann dann aus dem Modell abgelesen werden.

Gemäß der Erfindung wird vorgeschlagen, dass der Zustandsbeobachter zur Erfassung der Blattfehlstellung wenigstens ein Gondelazimutmoment und eine Blattfehlstellung als Zustandsgrößen aufweist. Die Zustandsgrößen sind diejenigen Größen, die in dem Zustandsbeobachter beobachtet bzw. geschätzt werden, was hier synonyme Begriffe sind.

Es wurde erkannt, dass das Gondelazimutmoment eine wichtige Dynamik der Windenergieanlage im Zusammenhang mit einer aerodynamischen Unwucht charakterisiert. Aus einer Differenz zwischen dem Gondelazimutmoment und einem Gondelbeschleunigungsmoment, das aus einer Drehbeschleunigung der Gondel in Gondeldrehrichtung berechnet werden kann, lässt sich ein Azimutantriebsmoment berechnen und mit einem gemessenen Azimutantriebsmoment vergleichen, um darüber die Beobachterzustände anzupassen. Es kann, bereinigt als Ausgangsgröße des Zustandsbeobachters dann verglichen werden mit einem tatsächlichen Azimutantriebsmoment der Gondel der Windenergieanlage.

Das Azimutantriebsmoment der Gondel, also das Moment, mit dem die Gondel zur Verstellung angetrieben wird, kann aus der Verstellaktivität der Azimutverstelleinrichtung erfasst werden. Besonders kann es aus einem Motorstrom des Azimutmotors oder aus allen Motorströmen aller Azimutmotoren der Azimutverstelleinrichtung erfasst werden.

Die Blattfehlstellung wenigstens eines Rotorblattes, die somit ebenfalls eine Zustandsgröße des Zustandsbeobachters ist und damit eine Zustandsgröße des Modells des Zustandsbeobachters ist, kann als beobachtete Größe aus dem Modell unmittelbar abgelesen werden. Dadurch steht die Blattfehlstellung dann auch als ständige Größe zur Verfügung. Die tatsächliche Blattfehlstellung kann in Abhängigkeit von der beobachteten Blattfehlstellung dadurch korrigiert werden. Sie kann zudem ständig überwacht werden bzw. es kann ständig überwacht werden, ob eine Blattfehlstellung oder zumindest eine zu große Blattfehlstellung auftritt.

Dafür sind keinerlei zusätzliche Sensoren erforderlich, wenn die Größen verwendet werden, die von der Azimutverstelleinrichtung ohnehin bekannt sind, die insbesondere in der Anlagensteuerung ohnehin vorliegen.

Insbesondere wird vorgeschlagen, dass der Zustandsbeobachter das Gondelazimutmoment, ein Azimutmoment-Offset und je eine Blattfehlstellung von zwei Rotorblättern als Zustandsgrößen aufweist. Das Gondelazimutmoment weist in eine Gondeldrehrichtung und setzt sich dabei zusammen aus je einer in Gondeldrehrichtung gerichteten Azimutdrehmomentkomponente eines aerodynamischen Blattdrehmomentes (M_{aero,A}, M_{aero,B}, M_{a-ero,C}) jedes Rotorblattes, und dem Azimutmoment-Offset, sodass eine Summe aus den Drehmomentkomponenten aller Rotorblätter und dem Azimutmoment-Offset das Gondelazimutmoment bildet.

Die Gondeldrehrichtung ist somit eine Drehrichtung um eine Turmachse, also die Drehrichtung, um die sich die Gondel bei der Azimutverstellung dreht.

Zu jedem Rotorblatt kann in Abhängigkeit von seinen aerodynamischen Eigenschaften, der Windgeschwindigkeit und seinem Blattwinkel, ein aerodynamisches Blattdrehmoment berechnet werden. Das aerodynamische Blattdrehmoment hängt dabei von seinem tatsächlichen Blattwinkel ab. Ist dieser bekannt, kann es davon abhängig über eine Berechnung, die unten noch angegeben und erläutert wird, berechnet werden.

Der tatsächliche Blattwinkel setzt sich aus einem vorgegebenen oder angenommenen Blattwinkel und einer Blattfehlstellung zusammen. Zur Berechnung des aerodynamischen Blattdrehmomentes kann somit auch der angenommene Blattwinkel und die Blattfehlstellung anstelle des tatsächlichen Blattwinkels verwendet werden. Besonders für die Modellbildung des Zustandsbeobachters kann es sinnvoll sein, eine solche Berechnungsvorschrift zugrunde zu legen und darüber diese Blattfehlstellung zumindest eines Rotorblattes als Zustandsgröße zu führen.

Das aerodynamische Blattdrehmoment wirkt im Grunde jeweils an einer Blattwurzel des betreffenden Rotorblattes. Steht das betreffende Rotorblatt waagerecht, also in einer 3-Uhr-Stellung oder 9-Uhr-Stellung, wirkt sein aerodynamisches Blattdrehmoment in voller Größe als Drehmoment in Gondeldrehrichtung, hat also maximalen Anteil am Gondelazimutmoment. Steht es senkrecht, wirkt es gar nicht in Gondeldrehrichtung, hat also keinen Anteil am Gondelazimutmoment. Das spiegelt sich jeweils in einer Azimutdrehmomentkomponente wieder, die entsprechend jeweils aus dem aerodynamischen Blattdrehmoment und dem zugehörigen Rotorwinkel berechnet werden können.

Die Übergänge zwischen diesen Stellungen sind fließend und der Anteil am Gondelazimutmoment hängt entsprechend von der Drehposition des Rotors ab, also dem Rotorwinkel. Dieser Anteil am Gondelazimutmoment ist die in Gondeldrehrichtung gerichteten Azimutdrehmomentkomponente des aerodynamischen Blattdrehmomentes des betreffenden Rotorblattes.

Das Gondelazimutmoment setzt sich somit aus diesen in Gondeldrehrichtung gerichteten Azimutdrehmomentkomponenten aller Blätter zusammen, zuzüglich des Azimutmoment-Offsets. Der Azimutmoment-Offset beinhaltet somit alle übrigen Anteile des Gondeldrehmomentes, die nicht aus den aerodynamischen Drehmomenten der Rotorblätter stammen. Dazu gehören bspw. Schräganströmungen auf den Rotor.

Besonders wurde erkannt, dass das Gondelazimutmoment die Summe aus dem Gondelazimutmoment-Offset sowie den in Gondeldrehrichtung transformierten aerodynamischen Blattdrehmomenten ist, also den Azimutdrehmomentkomponenten. Diese Azimutdrehmomentkomponenten addieren sich im Idealfall zu null, und Abweichungen von diesem Idealfall, dass diese Summe null ist, resultieren aus der Blattfehlstellung der Rotorblätter. Die aerodynamischen Blattdrehmomente werden aus dem Blattwinkel, der Blattfehlstellung, den Blatteigenschaften und der Windgeschwindigkeit berechnet und in Gondeldrehrichtung transformiert. Der Offset, also der Azimutmoment-Offset, umfasst alle anderen Momente, die auf den Azimutantrieb wirken. Dazu kann auch eine Schräganströmung gehören. Grundsätzlich kommt auch ein permanenter Offset eines Sensors in Betracht wie ein möglicherweise am Azimutmotor vorhandener Decoder, oder anderer Drehmomentensensor, der einen falschen Nullpunkt haben kann.

Bei der Berücksichtigung von zwei Fehlstellungen wird besonders davon ausgegangen, dass die Windenergieanlage bzw. ihr Rotor genau drei Rotorblätter aufweist. Ebenfalls wird angenommen, dass die Summe aller Blattfehlstellungen null ist. Hier liegt nämlich die Erkenntnis zugrunde, dass das Hauptproblem der Blattfehlstellung ist, dass sie zu unerwünschten unterschiedlichen Blattwinkeln der Rotorblätter untereinander führen. Ist die Summe der Blattfehlstellungen null, bedeutet das auch, dass ihr Mittelwert null ist.

Im stationären Fall, wenn alle Rotorblätter auf denselben Sollwinkel eingestellt werden, kann der Referenzblattwinkel dem Mittelwert aller erfassten Blattwinkel entsprechen. Werden dazu alle Blattfehlstellungen korrigiert, weisen alle Rotorblätter denselben Blattwinkel auf, nämlich den Referenzblattwinkel. Zwar kommt es besonders auf diesen stationären Fall an, denn dann kann besonders das Problem der aerodynamischen Unwucht auftreten, das Erfassen der Blattfehlstellung ist aber nicht darauf beschränkt und der Fall diente nur der Veranschaulichung. Die Annahme, dass die Summe aller Blattfehlstellungen null ist, kann auch im nichtstationären Fall angewendet werden, besonders kann diese Annahme generell dem Modell des Zustandsbeobachters zu Grunde liegen.

Sind also zwei Fehlstellungen bekannt, lässt sich die dritte Fehlstellung bestimmen, wenn die Summe dieser drei Fehlstellungen null ist. Dadurch kann der Zustandsbeobachter in seiner Ordnung gegenüber einer Variante reduziert werden, die alle drei Blattfehlstellungen als Zustandsgrößen verwendet. Es wird auch die Gefahr einer linearen Abhängigkeit von Zustandsgrößen untereinander vermieden.

Der Azimutmoment-Offset kann ebenfalls als Zustandsgröße berücksichtigt und kann dadurch quasi herausgerechnet werden. Besonders wird der Azimutmoment-Offset auch dynamisch berücksichtigt. Es ist nicht unbedingt erforderlich, diesen Azimutmoment-Offset als Eingangsgröße zu berücksichtigen oder zu kennen, es kann ausreichen, ihn in der Struktur des Zustandsbeobachters zu berücksichtigen. Der Azimutmoment-Offset, so wurde erkannt, ist in seiner Dynamik langsamer als der Anteil des Gondelazimutmoments, der durch die aerodynamischen Blattdrehmomente, also die aerodynamische Unwucht, hervorgerufen wird.

Gemäß einem Aspekt wird vorgeschlagen, dass zur Erfassung der Blattfehlstellung als Zustandsbeobachter ein Kalman-Filter verwendet wird. Hier wurde erkannt, dass Größen wie die Windgeschwindigkeit, die Rotordrehzahl und ein Motorstrom für den Beobachter relevante zu erfassende Größen sein können und diese verrauscht sein können. Dies kann über einen Kalman-Filter berücksichtigt werden, sodass vorgeschlagen wird, einen solchen zu verwenden.

Gemäß einem Aspekt wird vorgeschlagen, dass die Verstellaktivität der Azimutverstelleinrichtung unter Auswertung eines Azimutantriebsmomentes erfolgt, das ein Antriebsmoment bezeichnet, mit dem die Gondel in ihrer Azimutausrichtung verstellt wird. Insbesondere wird dazu vorgeschlagen, dass das Azimutantriebsmoment in Abhängigkeit von einem Motorstrom oder Motormoment des wenigstens einen Azimutmotors bestimmt wird. Insbesondere wird das Azimutantriebsmoment als Produkt aus dem Motorstrom bzw. Motormoment und einem Proportionalitätsfaktor bestimmt.

Es kommt auch in Betracht, dass mehrere Azimutmotoren verwendet werden. Dann wird vorgeschlagen, dass das Azimutantriebsmoment in Abhängigkeit von mehreren Motorströmen oder mehreren Motormomenten der mehreren Azimutmotoren bestimmt wird, insbesondere, dass das Azimutantriebsmoment als Produkt aus einer Summe der mehreren Motorströme oder einer Summe der mehreren Motormomente und einem Proportionalitätsfaktor bestimmt wird.

Zur Verstellung der Gondel in ihrer Azimutausrichtung, also überhaupt zur Verstellung der Gondel, denn die Verstellung in Azimutausrichtung ist die einzige Verstellung, die üblicherweise für eine Gondel vorgesehen ist, wird der wenigstens eine Azimutmotor verwendet. Er bringt dafür ein Motormoment auf und das kann bei einem üblichen Azimutmotor proportional zum Motorstrom sein.

Das Azimutantriebsmoment ist, unter Vernachlässigung von Reibungsverlusten, proportional zum Motormoment. Vernachlässigt wird dabei ebenfalls eine Dynamik, insbesondere Steifigkeit und Trägheit, eines Getriebes der Azimutverstelleinrichtung. Gäbe es nur einen Azimutmotor, entspräche der Proportionalitätsfaktor einem Übersetzungsverhältnis zwischen Azimutmotor und Gondel. Üblicherweise sind aber mehrere gleiche Azimutmotoren vorhanden, sodass die Anzahl der Azimutmotoren in dem Proportionalitätsfaktor ebenfalls berücksichtigt wird. Bei mehreren Motoren entspricht das Azimutantriebsmoment idealerweise der Summe der umgerechneten Motormomente. Als berücksichtigter Motorstrom kann die Summe der Motorströme aller Azimutmotoren verwendet werden. Es kann vereinfachend auch ein Motorstrom erfasst und über die Anzahl aller Motoren auf einen Gesamtstrom hochgerechnet werden.

Hier wurde besonders erkannt, dass der Motorstrom oder das Motormoment des wenigstens einen Azimutmotors eine sehr gute Grundlage bildet, um das Azimutantriebsmoment zu bestimmen. Damit ist das Azimutantriebsmoment auch gut zu bestimmen.

Bei der Verwendung einer permanent erregten Gleichstrommaschine ist der Motorstrom proportional zum Motormoment und in diesem Fall kann somit auf einfache Weise der Motorstrom und damit das Azimutantriebsmoment erfasst werden.

Das so erfasste Azimutantriebsmoment liefert gute Informationen über das dynamische Verhalten der Verstellaktivität und lässt dadurch gute Rückschlüsse auf das Gondelazimutmoment und damit auf die aerodynamische Unwucht zu, bzw. auf die Blattfehlstellungen die das verursachen.

Gemäß einem Aspekt wird vorgeschlagen, dass das Azimutantriebsmoment als Ausgangsgröße des Zustandsbeobachters verwendet wird, sodass der Zustandsbeobachter ein geschätztes Azimutantriebsmoment ausgibt und eine Differenz aus erfasstem und geschätztem Azimutantriebsmoment als Beobachtungsfehler zur Anpassung von Beobachterzuständen in den Zustandsbeobachter zurückgeführt wird.

Hier wurde besonders erkannt, dass das Azimutantriebsmoment sehr charakteristisch für die aerodynamische Unwucht ist bzw. die aerodynamische Unwucht sich in dem Azimutantriebsmoment gut wiederspiegelt. Außerdem wurde erkannt, dass das Azimutantriebsmoment wie vorstehend beschrieben wurde, gut erfasst werden kann und damit eine gute Vergleichsgröße bildet. Besonders wurde erkannt, dass das Azimutantriebsmoment auch insoweit gut erfassbar ist, dass eine dazu proportionale Größe unmittelbar erfassbar ist, nämlich der genannte Motorstrom. Das Motormoment ist entsprechend ebenfalls gut erfassbar.

Statt unmittelbar das Azimutantriebsmoment zu verwenden, kann eine dazu repräsentative Größe verwendet werden, die hier als Azimutantriebsgröße bezeichnet wird. Diese kann sowohl erfasst, als auch in dem Zustandsbeobachter geschätzt werden. Hier kommt besonders das Motormoment oder der Motorstrom des Azimutmotors als Azimutantriebsgröße in Betracht. Das Motormoment kann zu dem Azimutantriebsmoment proportional sein, wobei sich ein Proportionalitätsfaktor aus einem Übersetzungsverhältnis eines Getriebes zwischen Azimutmotor und Gondel ergibt. Zum Motorstrom kann ein weiterer Proportionalitätsfaktor hinzukommen, der einen Zusammenhang zwischen Motormoment und Motorstrom angibt.

Gemäß einem Aspekt wird vorgeschlagen, dass
dem Zustandsbeobachter zur Erfassung der Blattfehlstellung eine Modellbeschreibung zu Grunde liegt, in der
   - für jedes Rotorblatt ein aerodynamisches Blattdrehmoment Mₐₑᵣₒ beschrieben wird durch die Gleichung: ${M}_{aero} = \frac{1}{3} ∗ \frac{1}{2} ∗ π ∗ {ρ}_{air} ∗ {c}_{s} \left(λ,α+γ\right) ∗ {{l}_{bl}}^{3} ∗ {\left({v}_{Wind}+{ω}_{Yaw}∗{l}_{bl}∗sin\left(φ\right)\right)}^{2}$
*mit:*
   *ρₐᵢᵣ = Luftdichte* $λ = \frac{{ω}_{Rot} ∗ {l}_{bl}}{{v}_{Wind} + {ω}_{yaw} ∗ {l}_{bl} ∗ sin \left(φ\right)} = Schnelllaufzahl \left(\begin{matrix}{ω}_{Rot} = Rotorgeschwindigkeit bzw . \\ Rotordrehzahl in rad / s\end{matrix}\right)$
   *l_{bl} = Rotorblattlänge*
   *α = Blattwinkel*
   *γ = Blattfehlstellung des Rotorblattes*
   *cₛ(λ, α*) *= Aerodynamische Eigenschaften des Rotorblattes*
   *ω_{Yaw}* * *l_{bl}* * *sin*(*φ*) *= Scheinbare Windgeschwindigkeit durch eine Azimutbewegung am Rotorblatt*
wobei jedes Blattdrehmoment Mₐₑᵣₒ ein durch das Rotorblatt auf den Rotor wirkendes Drehmoment beschreibt, nämlich in einer Drehrichtung quer zur Drehachse des Rotors, und wobei insbesondere vorgesehen ist, dass
   - die Summe der Blattfehlstellungen aller Rotorblätter null ist und sich die Blattfehlstellung einer der Rotorblätter aus den Blattfehlstellungen der übrigen Rotorblätter berechnet, wobei
in der Modellbeschreibung außerdem Berechnungen zu Grunde liegen, in denen
   - jedes der Blattdrehmomente jeweils mittels einer Winkeltransformation in Abhängigkeit von einem auf das jeweilige Blatt bezogenen Rotorwinkel, der auch als Drehwinkel des Rotors bezeichnet werden kann, in eine in Gondeldrehrichtung gerichtete Azimutdrehmomentkomponente transformiert wird,
   - das Gondelazimutmoment als Summe aus den Azimutdrehmomentkomponenten und dem Azimutmoment-Offset berechnet wird,
   - in Abhängigkeit von einer Änderung einer Azimutdrehzahl und einem Massenträgheitsmoment der Gondel ein Gondelbeschleunigungsmoment berechnet wird,
   - in Abhängigkeit von einer Differenz zwischen dem Gondelazimutmoment und dem Gondelbeschleunigungsmoment ein Azimutantriebsmoment, bestimmt wird, wobei
   - das Azimutantriebsmoment, oder eine dazu repräsentative, insbesondere proportionale Größe eine Ausgangsgröße des Modells des Zustandsbeobachters bildet, und insbesondere
   - zwei der Blattfehlstellungen, der Azimutmoment-Offset und das Azimutmoment Systemzustände des Modells bilden.

Dadurch wird somit das dem Zustandsbeobachter zugrunde liegende Modell beschrieben. Gemäß dieser Modellbeschreibung wird für jedes der drei Rotorblätter ein aerodynamisches Blattdrehmoment bestimmt, nämlich aus Windgeschwindigkeit, Rotordrehzahl und Blattwinkel. Außerdem hängt das aerodynamische Blattdrehmoment auch von der Blattfehlstellung des jeweiligen Blattes ab. Der Berechnung liegen auch Eigenschaften des Rotorblattes zugrunde, die sich besonders aus seinem Profil ergeben, und solche Eigenschaften können in einem Koeffizienten zusammengefasst werden. Dazu ist der Koeffizient C_{S} vorgesehen.

Der Koeffizient CS kann als aerodynamischer Biegemomentenkoeffizient bezeichnet werden. Er stellt einen quantitativen Zusammenhang zwischen dem auf das Blatt wirkenden Wind und dem resultierenden aerodynamischen Blattdrehmoment Maero her. Er hängt von den aerodynamischen Eigenschaften des Rotorblattes und dem Blattwinkel ab. Er ist bei dem Entwurf und/oder der Auslegung des Rotorblattes bekannt, kann aber auch durch Untersuchungen des Rotorblattes und/oder Simulationen des Rotorblattes ermittelt werden.

Auf diese Art und Weise kann das aerodynamische Blattdrehmoment, das vereinfachend, aber synonym als Blattdrehmoment bezeichnet werden kann, für jedes der drei Rotorblätter berechnet werden. Die Berechnung für jedes Rotorblatt verwendet natürlich die dem jeweiligen Rotorblatt zugeordneten Wert. Die meisten Werte sind aber für alle drei Rotorblätter gleich, wobei von einer gleichen Bauart ausgegangen wird. Unterschiedlich sind bzw. können sein, natürlich die Blattfehlstellung jedes einzelnen Blattes (γ_{A}, γ_{B}, γ_{C}). Ebenfalls können die Blattwinkel der Rotorblätter unterschiedlich sein, wenn zum Beispiel eine Einzelblattregelung verwendet wird.

Ebenfalls geht ein auf das jeweilige Blatt bezogener Rotorwinkel φ in die Berechnung ein und dieser Rotorwinkel φ ist für jedes der drei Rotorblätter unterschiedlich, wobei sich diese blattbezogenen Rotorwinkel jeweils um 120° unterscheiden. Es kann somit ein Rotorwinkel des Rotors eines Blattes in die Rotorwinkel für die anderen beiden Blätter umgerechnet werden.

Ein Blattdrehmoment ist somit ein Drehmoment, das sich daraus ergibt, dass der Wind an dem betreffenden Rotorblatt angreift und es somit im Grunde um die Blattwurzel des Rotorblattes biegt. Es ergibt sich somit ein Drehmoment, das eine Drehachse aufweist, auch wenn es nicht zu einer Drehung um diese Achse führt, die senkrecht zur Rotorachse steht. Steht bspw. das betreffende Rotorblatt in 12-Uhr-Stellung, ist diese Drehachse waagerecht und, wie in jeder Stellung, quer zur Rotorachse. Steht das Rotorblatt in 9-Uhr-Stellung oder in 3-Uhr-Stellung, ist diese Drehachse, die insoweit fiktiv ist, senkrecht angeordnet. Diese Drehachse verändert also ihre Position mit der Drehung des Rotors.

Jedes Blattdrehmoment wird dann über eine Winkeltransformation in eine Azimutdrehmomentkomponente umgerechnet. Die Azimutdrehmomentkomponente beschreibt somit ein Azimutmoment, also ein Drehmoment, um die senkrechte Turmachse, das einzig durch das betreffende Rotorblatt durch einen direkt von vorne kommenden Wind hervorgerufen wird. Diese Azimutdrehmomentkomponente hängt somit von dem Rotorwinkel, also dem Drehwinkel des Rotors ab, bezogen auf das jeweilige Blatt. In 12-Uhr-Stellung oder in 6-Uhr-Stellung des betreffenden Rotorblattes ist somit die Azimutdrehmomentkomponente null, wohingegen sie bei 3-Uhr-Stellung oder 9-Uhr-Stellung des betreffenden Rotorblattes dem aerodynamischen Blattdrehmoment entspricht. Bei den übrigen Rotorwinkeln ergeben sich entsprechend Werte dazwischen.

Als direkt von vorn wird hier ein Wind bezeichnet, der waagerecht in Richtung der Rotorachse strömt und keine anderen Windkomponenten aufweist. Er strömt also entsprechend der Azimutausrichtung der Gondel. Andere Windkomponenten können auftreten und auch auf das Rotorblatt wirken, sie werden aber nicht über das aerodynamische Blattdrehmoment berücksichtigt, sondern über ein Azimutmoment-Offset.

Somit ergeben sich drei Azimutdrehmomentkomponente und diese werden aufaddiert und zusätzlich wird noch der Azimutmoment-Offset aufaddiert. Dieses Azimutmoment-Offset entspricht im Grunde den übrigen Krafteinwirkungen, die sich durch Schrägeinströmungen oder andere Windeinflüsse ergeben können, die sich nicht in der (idealisierten) Windgeschwindigkeit wiederspiegeln, die in die Berechnung der aerodynamischen Blattdrehmomente einfließt und im Übrigen für alle drei Rotorblätter als gleich angenommen wird.

Das resultierende Azimutmoment wird als Gondelazimutmoment bezeichnet. Es ist also die Summe aller Teildrehmomente, die sich aus von außen auf die Gondel einwirkenden Kräften ergibt, also insbesondere Kräfte, die auf den Rotor von außen einwirken.

Für die Blattfehlstellung wird angenommen, dass ihre Summe null ist, und somit lässt sich eine der Blattfehlstellungen aus den übrigen beiden berechnen, wobei von einem Rotor mit drei Rotorblättern ausgegangen wird.

Außerdem wird die Änderung einer Azimutdrehzahl betrachtet. Das kann besonders dadurch erfolgen, dass eine Rotordrehzahl eines Azimutmotors erfasst und über ein Übersetzungsgetriebe in eine Drehzahl der Azimutbewegung, also der Bewegung der Gondel um die senkrechte Turmachse umgerechnet wird. Die unmittelbare Azimutdrehzahl ist natürlich sehr gering und kann bspw. eine Drehbewegung um wenige Grad aufweisen, z.B. wenige Grad pro Sekunde oder weniger. Es kann aber eine dazu repräsentative Größe, insbesondere dazu proportionale Größe verwendet werden, insbesondere eine Drehzahl des Azimutmotors, also die Motordrehzahl.

Diese Drehzahl, sei es nun die Motordrehzahl oder die Azimutdrehzahl, wird nach der Zeit abgeleitet, und ggf. mit einem Proportionalitätsfaktor multipliziert, besonders einem Übersetzungsverhältnis zwischen Azimutmotor und Gondel, um eine Azimutbeschleunigung zu erhalten. Diese Azimutbeschleunigung wird mit dem Massenträgheitsmoment der Gondel multipliziert, woraus sich ein Gondelbeschleunigungsmoment ergibt. Das Gondelbeschleunigungsmoment beschreibt somit ein Drehmoment, das die Gondel um die berechnete Azimutbeschleunigung beschleunigen würde, wenn keine äußeren Kräfte vorliegen, wenn das Gondelazimutmoment also null wäre.

Jedenfalls wird eine Differenz aus Gondelazimutmoment und Gondelbeschleunigungsmoment gebildet und daraus ergibt sich ein Azimutantriebsmoment. Dieses Azimutantriebsmoment bildet eine Ausgangsgröße dieser Modellbeschreibung, also dieses Modells des Zustandsbeobachters. Insbesondere wird aber ein zu dem Azimutantriebsmoment repräsentatives, insbesondere proportionales Moment ausgegeben, nämlich insbesondere ein Motormoment eines Azimutmotors. Dieses Motormoment bildet dann also den Ausgang des Modells und kann mit einem erfassten Motormoment verglichen werden. Die Differenz hieraus kann zum Anpassen der Zustandsgrößen des Zustandsbeobachters bzw. des Zustandsbeobachtermodells verwendet werden. Das erfolgt in einer aus der Theorie des Kalman-Filters bekannten Art und Weise.

Insbesondere wird vorgeschlagen, dass zwei der Blattfehlstellungen, der Azimutmoment-Offset und das Gondelazimutmoment, Systemzustände des Modells bilden. Diese vier Zustände sind es, die bei der Rückführung der Differenz zwischen geschätzter und erfasster Ausgangsgröße, also aus der Differenz zwischen Motormoment als Ausgangsgröße des Beobachters und erfasste Motormoment angepasst werden. Eine geschätzte Größe oder geschätzter Zustand kann synonym auch als beobachtete Größe bzw. beobachteter Zustand bezeichnet werden.

Gemäß einem Aspekt wird vorgeschlagen, dass dem Zustandsbeobachter eine Modellbeschreibung zu Grunde liegt, die durch folgendes Gleichungssystem beschrieben werden kann, wobei der Rotor drei Rotorblätter A, B und C aufweist: ${M}_{aero , A} = f \left({v}_{w},{n}_{R ,}α,{γ}_{A}\right) ; {M}_{aero , B} = f \left({v}_{w},{n}_{R ,}α,{γ}_{B}\right) ; {M}_{aero , C} = f \left({v}_{w},{n}_{R ,}α,{γ}_{C}\right) ;$ ${M}_{yaw , A} = f \left({M}_{aero , A , φ}\right) ; {M}_{yaw , B} = f \left({M}_{aero , B , φ}\right) ; {M}_{yaw , C} = f \left({M}_{aero , C , φ}\right)$ ${γ}_{c} = - {γ}_{A} - {γ}_{B}$ ${M}_{yaw , Nac} = {M}_{yaw , A} + {M}_{yaw , B} + {M}_{yaw , C} + {M}_{yaw , off}$ ${M}_{acc} = {i}_{g} . 2 π \frac{{dn}_{DRV}}{dt} . {J}_{Nac}$ ${M}_{DRV} = \frac{1}{{i}_{g}} . \left({M}_{yaw , Nac}-{M}_{acc}\right)$ mit
*M_{aero,A}*, *M_{aero,B}* und *M_{aero,C}*: aerodynamisches Blattdrehmoment Mₐₑᵣₒ des Rotorblattes A, B bzw. C;
*v_{w}*: Windgeschwindigkeit; *n_{R}*: Rotordrehzahl; α: Blattwinkel; *φ:* Rotorwinkel
*M_{yaw,A}, M_{yaw,B}* und *M_{yaw,C}*: Azimutdrehmomentkomponente des Rotorblattes A, B bzw. C;
*γ_{A}, γ_{B} und γ_{c}:* Blattfehlstellung des Rotorblattes A, B bzw. C;
*M_{yaw,off}*: Azimutmoment-Offset;
*M_{yaw,Nac}*: Gondelazimutmoment;
*M_{acc}*: Gondelbeschleunigungsmoment; ${M}_{acc} = {i}_{g} . 2 π \frac{{dn}_{DRV}}{dt} . {J}_{Nac} ;$
*i_{g}*: Getriebeübersetzung zwischen Azimutmotor und Gondel;
*n_{DRV}:* Drehzahl Azimutmotor;
*J_{Nac}*: Massenträgheitsmoment Gondel
*M_{DRV}* : Motormoment Azimutmotor bzw. Summe aller Azimutmotormomente, wenn mehrere Azimutmotoren verwendet werden.

Das Modell, das in dem Zustandsbeobachter verwendet wird, wird somit durch die vorstehenden Gleichungen beschrieben.

Die Berechnung des aerodynamisches Blattdrehmoment Mₐₑᵣₒ jedes Rotorblattes kann durch die weiter oben konkret angegebene Gleichung erfolgen. Die Azimutdrehmomentkomponente jedes Rotorblattes berechnet sich aus dem aerodynamischen Blattdrehmoment Mₐₑᵣₒ jeweils durch eine Winkeltransformation in Abhängigkeit vom Rotorwinkel.

Der Azimutmoment-Offset tritt lediglich als Teilkomponente in der Summe zur Berechnung des Gondelazimutmomentes auf. Es kann als Störgröße verstanden werden und bildet eine Zustandsgröße des Zustandsbeobachters und wird durch die Rückführung des Beobachterfehlers angeglichen.

Die Blattfehlstellungen, zumindest zwei von ihnen, können ebenfalls als Störgröße verstanden werden. Sie bilden jeweils eine Zustandsgröße des Zustandsbeobachters und werden durch die Rückführung des Beobachterfehlers angeglichen und dadurch überhaupt erst bestimmt. Für diese Blattfehlstellungen in dem Modell, gleiches gilt für den Azimutmoment-Offset, können bei der Berechnung im Zustandsbeobachter Anfangswerte vorgegeben werden, für die vorzugsweise der Wert null gewählt wird.

Es wird zu dem Modell des Zustandsbeobachters, sowohl gemäß diesem Aspekt, als auch gemäß den übrigen Aspekten, besonders vorgeschlagen, dass der Rotorwinkel, eine Windgeschwindigkeit, eine Rotordrehzahl, ein kollektiver Blattwinkel, und eine Motordrehzahl eines Azimutmotors als Eingangsgrößen verwendet werden. Statt des kollektiven Blattwinkels kann auch jeweils für jedes Rotorblatt ein individueller Blattwinkel verwendet werden. Das Motormoment des Azimutmotors kann als Ausgangsgröße des Modells und damit des Zustandsbeobachters gewählt werden.

Erfindungsgemäß wird zudem ein Verfahren zum Korrigieren wenigstens einer Blattfehlstellung eines Rotorblatts einer Windenergieanlage gemäß Anspruch 10 vorgeschlagen. Dieses Verfahren ist somit dazu vorgesehen, wenigstens eine Blattfehlstellung eines Rotorblattes eines Rotors einer Windenergieanlage mit mehreren in ihren Blattwinkeln verstellbaren Rotorblättern zu korrigieren. Die Blattfehlstellung beschreibt dabei eine Blattwinkelabweichung eines erfassten Blattwinkels des Rotorblattes von einem Referenzblattwinkel, wie auch bereits oben zum Verfahren zum Erfassen einer Blattfehlstellung erläutert wurde.

Ebenso liegt auch hier eine Windenergieanlage zugrunde, die eine Gondel mit Rotor und einer Azimutverstelleinrichtung aufweist, um die Gondel in einen Azimutwinkel aufweisende Azimutausrichtung zu verstellen. Auch hier wird zur Verstellung der Azimutausrichtung der Azimutwinkel mittels der Azimutverstelleinrichtung einem vorgebbaren Azimutsollwinkel nachgeführt. Die Blattfehlstellung wird in Abhängigkeit von einer Azimutbewegung der Gondel erfasst. Insbesondere erfolgt dies mit einem Verfahren gemäß wenigstens einem der vorstehend beschriebenen Aspekte.

Weiterhin wird vorgeschlagen, dass zu jedem Rotorblatt ein Korrekturwinkel in Abhängigkeit von der jeweiligen erfassten Blattfehlstellung bestimmt wird und der Blattwinkel um den Korrekturwinkel korrigiert wird.

Hier wurde besonders erkannt, dass eine solche Korrektur durch ein solches Verfahren auch online möglich ist. Dadurch kann vermieden werden, dass zunächst eine Blattfehlstellung erkannt werden muss, z.B. in einem Offline-Verfahren, und dann ein Abgleich vorgenommen werden kann, um eine solche Blattfehlstellung auszugleichen. Stattdessen kann die Blattfehlstellung in Abhängigkeit von einer Azimutbewegung der Gondel erfasst und dann in einen Korrekturwert umgerechnet werden.

Besonders ist hier vorteilhaft, dass das vorgeschlagene Verfahren ständig mitlaufen kann und die Blattfehlstellungen besonders als beobachtete Zustände ausgegeben werden können. Das Verfahren arbeitet so, dass insbesondere die Kenntnis einer einmal durchgeführten Korrektur nicht benötigt werden, also nicht in das Verfahren, insbesondere nicht in den vorgeschlagenen Zustandsbeobachter einfließt. Das Erfassungsverfahren braucht also nicht an eine durchgeführte Korrektur angepasst zu werden und kann im laufenden Betrieb ständig mitlaufen.

Blattfehlstellungen können oftmals ihre Ursache in Produktionsfehlern oder Installationsfehlern haben und sollten nur zu Beginn bzw. nach einem Bauteilwechsel auftreten. Das bedeutet, dass dann, wenn doch während des Betriebs eine Blattfehlstellung auftritt, es wahrscheinlich ist, dass ein Schaden an der Windenergieanlage vorliegt. Ein solcher Schaden kann bspw. am Rotorblatt vorliegen, oder er kann auch an einem Drehgeber des entsprechenden Blattwinkels bzw. Blattwinkelverstellsystems vorliegen. Durch das vorgeschlagene Verfahren können solche Schäden ebenfalls detektiert werden. Sie können zunächst korrigiert werden, vorzugsweise wird aber vorgeschlagen, beim Erkennen einer solchen Blattfehlstellung im laufenden Betrieb zusätzlich eine Warnung auszugeben, damit eine Überprüfung der Ursache der Blattfehlstellung durchgeführt werden kann.

Daher wird gemäß einem Aspekt vorgeschlagen, dass eine erfasste Blattfehlstellung mit einem vorgebbaren Abweichungsgrenzwert verglichen wird, und eine Fehler- oder Warnmeldung erzeugt wird, wenn die erfasste Blattfehlstellung dem Betrage nach größer als der Abweichungsgrenzwert ist. Ein solcher Abweichungsgrenzwert kann insbesondere im Bereich von 0,2° bis 2° liegen.

Gemäß einem Aspekt wird vorgeschlagen, dass der Korrekturwinkel der erfassten Blattfehlstellung entspricht, oder der Korrekturwinkel der erfassten Blattfehlstellung nachgeführt wird, insbesondere mit einer Verzögerungsfunktion, die insbesondere eine Zeitkonstante von wenigstens einer Stunde aufweist.

Hier wurde besonders erkannt, dass hierdurch eine Online-Umsetzung und sogar eine vollautomatische Umsetzung möglich ist. Die erfasste Blattfehlstellung kann unmittelbar als Korrekturwert umgesetzt werden. Durch die sehr langsame Nachführung werden Interaktionen mit anderen Regelungsdynamiken ausgeschlossen.

Durch die besonders bevorzugte Ausführung mit einer langen Verzögerungszeit bei der Umsetzung kann dies besonders dazu führen, dass während der Korrekturumsetzung alle drei Rotorblätter gleichmäßig angeglichen werden, so dass insgesamt alle Blattfehlstellungen zu null korrigiert werden.

Erfindungsgemäß wird auch eine Windenergieanlage gemäß Anspruch 12 vorgeschlagen, die einen Rotor mit mehreren in ihren Blattwinkeln verstellbaren Rotorblättern aufweist, wobei
- die Windenergieanlage eine Gondel mit dem Rotor und einer Azimutverstelleinrichtung aufweist, um die Gondel in einer einen Azimutwinkel aufweisenden Azimutausrichtung zu verstellen, und
- zur Verstellung der Azimutausrichtung der Azimutwinkel mittels der Azimutverstelleinrichtung einem vorgebbaren Azimutsollwinkel nachgeführt wird, wobei
- die Windenergieanlage eine Steuereinrichtung ausweist, die dazu vorbereitet ist, ein Verfahren nach einem der vorstehenden Aspekte auszuführen.

Besonders kann in der Steuereinrichtung ein entsprechendes Programm implementiert sein, das das Verfahren zum Erfassen gemäß wenigstens einem vorstehend beschriebenen Aspekt ausführt und/oder ein Verfahren zum Korrigieren einer Blattfehlstellung gemäß wenigstens einem vorstehend beschriebenen Aspekt ausführt.

Die Erfindung wird nachfolgend unter Bezugnahme auf die begleitenden Figuren beispielhaft näher erläutert.
- **Figur 1**: zeigt eine Windenergieanlage in einer perspektivischen Darstellung.
- **Figur 2**: zeigt einen Rotor einer Windenergieanlage schematisch in einer Frontansicht.
- **Figur 3**: zeigt eine Gondel mit einem Rotor schematisch in einer Draufsicht.
- **Figur 4**: zeigt ein Modell eines vorgeschlagenen Zustandsbeobachters schematisch in einem Blockschaltbild.

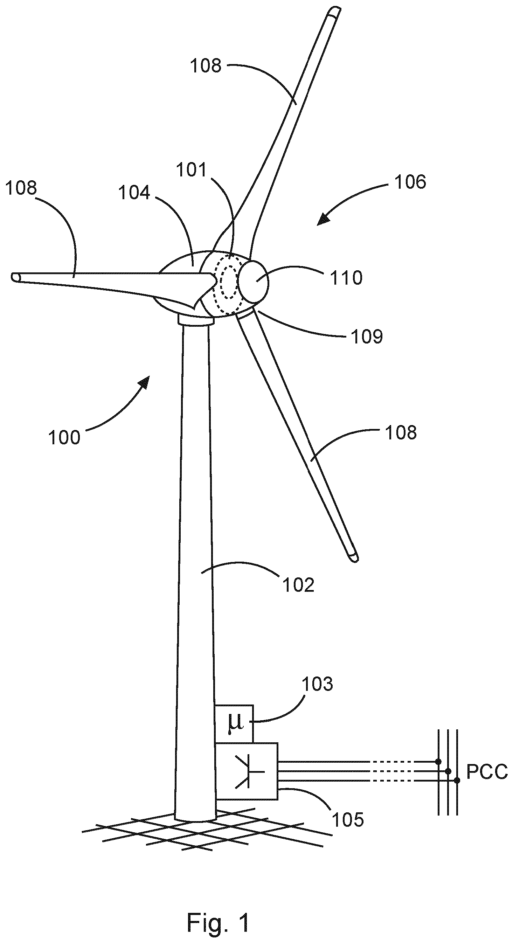

**Figur 1** zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung in ein elektrisches Versorgungsnetz an einem Netzanschlusspunkt PCC ist eine Einspeiseeinheit 105 vorgesehen, die besonders als Wechselrichter ausgebildet sein kann. Zum Steuern der Windenergieanlage 100 und auch der Einspeiseeinheit 105 ist eine Anlagensteuerung 103 vorgesehen.

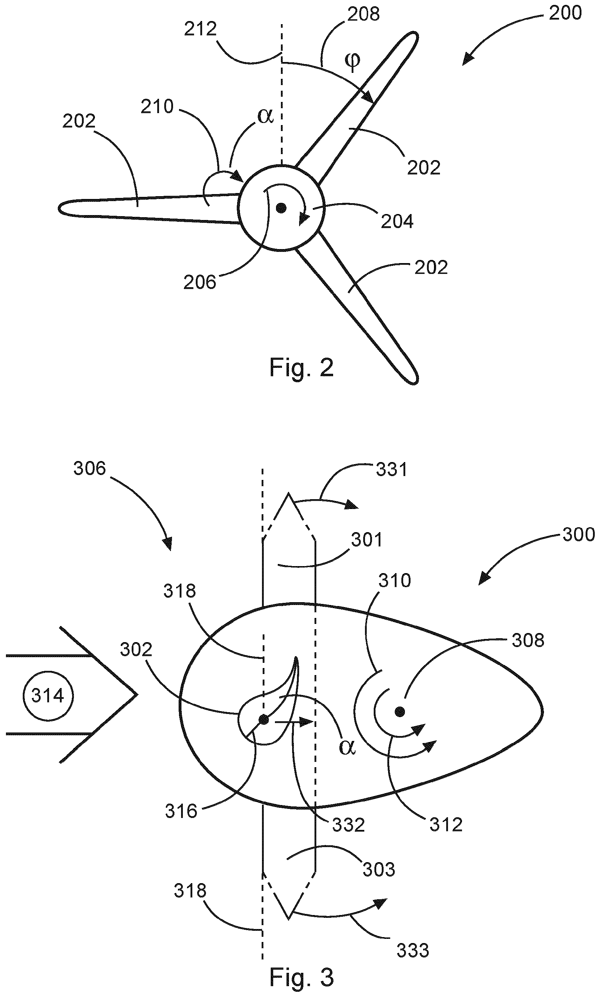

**Figur 2** zeigt einen Rotor 200 mit 3 Rotorblättern 202 in einer Draufsicht von vorne auf einen Spinner 204. Der Rotor 200 ist somit in Figur 2 aus Sicht des Windes gezeigt. Im Betrieb führt der Wind zu einer Drehung des Rotors 200 in Rotordrehrichtung 206. Der Rotor 200 und damit jedes Rotorblatt 202 weist dadurch einen Rotorwinkel 208 auf, der auch mit dem griechischen Buchstaben φ bezeichnet wird.

Der Rotorwinkel 208 bzw. φ kann auf einen Rotorbezugswinkel 212 bezogen werden, der in **Figur 2** exemplarisch als gestrichelte, senkrechte Linie eingezeichnet ist. Demnach wäre diese Senkrechte die Bezugsgröße und zu einem Rotorblatt, das senkrecht nach oben steht (12-Uhr-Stellung), würde der Rotorwinkel somit den Wert null aufweisen.

Exemplarisch ist in **Figur 2** nur ein Rotorwinkel exemplarisch zu einem Rotorblatt eingezeichnet. Für die übrigen beiden Rotorblätter ergibt sich entsprechend ein Rotorwinkel, der um 120° oder 240° größer oder kleiner ist.

Exemplarisch ist in **Figur 2** auch eine Blattwinkelrichtung 210 eingezeichnet, allerdings nur exemplarisch zu einem Rotorblatt, in die das betreffende Rotorblatt in seinem Rotorblattwinkel α verstellt werden kann.

**Figur 3** zeigt schematisch eine Gondel 300 in einer Draufsicht. Sie weist einen Rotor 306 mit einem ersten, zweiten und dritten Rotorblatt 301, 302 und 303 auf. Das zweite Rotorblatt 302 befindet sich hierbei in einer 12-Uhr-Stellung, steht also senkrecht nach oben. Das erste und dritte Rotorblatt 301, 303 stehen in einer 8-Uhr- bzw. 4-Uhr-Stellung.

Die Gondel 300 ist um eine senkrechte Turmachse 308 in Gondeldrehrichtung 310 drehbar, also in ihrer Azimutausrichtung verstellbar. In diese Gondeldrehrichtung 310 weist somit auch ein Gondelazimutmoment 312.

Veranschaulichend ist in Figur 3 ein auf die Gondel 300, und damit den Rotor 306 wirkender Wind 314 eingezeichnet bzw. angedeutet. Der Wind 314 wirkt auf jedes der drei Rotorblätter 301 bis 303 und führt damit jeweils zu einem aerodynamischen Blattdrehmoment 331 bis 333 an dem jeweiligen Rotorblatt 301 bis 303. Jedes dieser aerodynamischen Blattdrehmomente 331 bis 333 führt jeweils zu einer in Gondeldrehrichtung 310 gerichteten Azimutdrehmomentkomponente. Diese hängt vom Rotorwinkel φ ab, der in Figur 2 das Bezugszeichen 208 trägt.

Wie stark und in welcher Richtung das jeweilige aerodynamische Blattdrehmoment 331 bis 333 zu dem Gondelazimutmoment 312 beiträgt, hängt somit von diesem Rotorwinkel φ ab. Gemäß der Definition des Rotorwinkels φ bzw. 208 der Figur 2 berechnet sich die jeweilige Azimutdrehmomentkomponente aus dem jeweiligen aerodynamischen Blattdrehmoment 331 bis 333, multipliziert mit sin(φ). Die Azimutdrehmomentkomponente des ersten Rotorblatts 301 ist somit dem Gondelazimutmoment 312 entgegengerichtet, wohingegen die Azimutdrehmomentkomponente des dritten Rotorblattes 303 in Richtung des Gondelazimutmoments 312 weist. Bei gleichmäßigem Wind dürften sich in der gezeigten Stellung die Azimutdrehmomentkomponenten des ersten und dritten Rotorblatts 301,303 aufheben, und damit die Azimutdrehmomentkomponenten aller drei Rotorblätter aufheben, da das zweite Rotorblatt 302 in der senkrechten Stellung eine Azimutdrehmomentkomponente mit dem Wert null aufweist.

Erfahren die einzelnen Rotorblätter aber unterschiedliche Kräfte aus dem Wind und damit unterschiedliche aerodynamische Blattdrehmomente, weil ihre Blattwinkel α unterschiedlich sind, so heben sie sich nicht auf, und führen zu einem spürbaren Anteil an dem Gondelazimutmoment 312. Durch Drehung des Rotors verändert sich dieser Anteil, insbesondere zyklisch und mit wechselndem Vorzeichen.

Das Gondelazimutmoment 312 weist außerdem eine weitere Komponente aufgrund eines Azimutmoment-Offsets auf, das in Figur 3 allerdings nicht eingezeichnet ist.

Zur Veranschaulichung ist in Figur 3 zu dem zweiten Rotorblatt 302 ein Blattprofil angedeutet und darin ebenfalls veranschaulichend ein Blattwinkel α eingezeichnet. Hier wird angenommen, dass eine Ausrichtung des Rotorblattes, hier nämlich des zweiten Rotorblattes 302, mit seiner Blattsehne 316 in Richtung einer Rotorebene 318 dem Blattwinkel null entspricht. Der hier exemplarisch eingezeichnete Blattwinkel α weist somit zu dieser Rotorebene 318 einen Blattwinkel α auf, der in dem gezeigten Beispiel bzw. der gezeigten Momentaufnahme etwa den Wert von 30° aufweist. In einem Teillastbetrieb weist der Rotorblattwinkel α üblicherweise einen Wert von etwa 0° bis 5° auf.

Ein solcher Blattwinkel α wird für alle Rotorblätter gleich vorgegeben und als kollektiver Blattwinkel bezeichnet. Gegebenenfalls kann ein individueller Anteil überlagert werden. Statt des kollektiven Blattwinkels kann auch jeweils für jedes Rotorblatt ein individueller Blattwinkel verwendet werden, wenn eine Einzelblattverstellung eingesetzt wird. Es kann dann auch ein individueller Anteil überlagert werden.

Die zu erfassende Blattfehlstellung ist somit die Abweichung eines erfassten Blattwinkels von dem tatsächlichen Blattwinkel α, oder von einem anderen Referenzblattwinkel, der in Figur 3 nicht dargestellt ist. Die Blattfehlstellung ist für jedes Rotorblatt individuell zu erfassen, kann aber in einem gemeinsamen Vorgang erfasst werden.

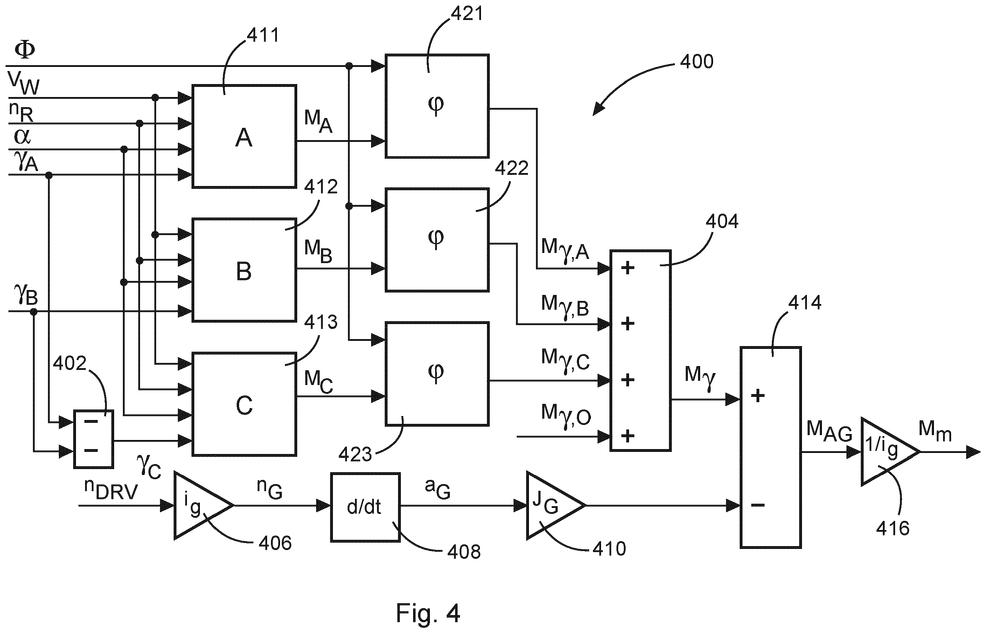

Um die Blattfehlstellung jedes Rotorblatts zu erfassen, wird die Verwendung eines Zustandsbeobachters vorgeschlagen, dem ein Modell zugrunde liegt, das in **Figur 4** dargestellt ist. Figur 4 zeigt somit ein Modell 400, in das ein Rotorwinkel φ, eine Windgeschwindigkeit V_{W}, eine Rotordrehzahl n_{R} und ein kollektiver Blattwinkel α als Eingangsgrößen eingehen. Hier wird angenommen, dass keine Einzelblattsteuerung vorliegt, sodass für jedes Rotorblatt derselbe Sollwert für den Blattwinkel vorliegt. Dieser wird für jedes Rotorblatt eingestellt, wobei dann der eingestellte Rotorblattwinkel jeweils von dem Sollwert um die Blattfehlstellung abweicht. Ebenfalls geht eine Motordrehzahl n_{DRV} eines Azimutmotors als Eingangsgröße ein.

Weiterhin finden eine Blattfehlstellung γ_{A} eines ersten Rotorblattes A, eine zweite Blattfehlstellung γ_{B} eines zweiten Rotorblattes B und eine dritte Blattfehlstellung γ_{C} eines dritten Rotorblattes C Berücksichtigung. Um diese Blattfehlstellung weicht von dem jeweiligen Rotorblatt der tatsächliche Rotorblattwinkel dann von dem Sollwert, also dem kollektiven Blattwinkel α ab. Die ersten beiden Blattfehlstellungen γ_{A}, γ_{B} sind als Eingangsgrößen dargestellt, werden in das Modell 400 aber nicht als Eingangsgrößen eingegeben. Sie sind durch den Zustandsbeobachter unter Verwendung dieses Modells 400 zu bestimmen und bilden jeweils einen Systemzustand des Beobachters.

Die dritte Blattfehlstellung γ_{C} wird aus diesen beiden ersten Blattfehlstellungen γ_{A}, γ_{B} berechnet. Sie entspricht dem negativen Wert der Summe beider ersten beiden Blattfehlstellungen γ_{A} und γ_{B}. Dafür ist der Subtraktionsblock 402 vorgesehen. Wenn die Annahme, dass die Summe aller drei Blattfehlstellungen null ist, nicht gemacht wird, kann auch die dritte Blattfehlstellung γ_{C} als zusätzliche Eingangsgröße verwendet werden.

Das Modell 400 berechnet für jedes der drei Rotorblätter A, B und C jeweils in einem Aerodynamikblock 411 bis 413 ein aerodynamisches Blattdrehmoment M_{aero,A}, M_{aero,B} und M_{a-ero,C}, die der Figur 4 der besseren Übersichtlichkeit halber nur als M_{A}, M_{B} und M_{C} eingezeichnet sind.

Jedes dieser aerodynamischen Blattdrehmomente M_{A}, M_{B} und M_{C} wird in einem entsprechenden ersten, zweiten bzw. dritten Transformationsblock 421 bis 423 unter weiterer Berücksichtigung Ihres Rotorwinkels in eine Azimutdrehmomentkomponente M_{yaw,A}, M_{yaw,B} und M_{yaw,C} transformiert, die zur besseren Übersichtlichkeit in Figur 4 als M_{y,A}, M_{y,B} und M_{y,C} bezeichnet werden.

Zur Berücksichtigung Ihres jeweiligen Rotorwinkels, erhalten die Transformationsblöcke 421 bis 423 den allgemeinen Rotorwinkel φ als Eingangsgröße und rechnen diesen entsprechend in den individuell zutreffenden Rotorwinkel um, in dem der Rotorwinkel φ gegebenenfalls um 120° oder 240° erhöht oder verringert wird.

Über den Summenbildungsblock 404 werden die drei Azimutdrehmomentkomponenten M_{y,A}, M_{y,B} und M_{y,C} zu dem Gondelazimutmoment M_{y} aufaddiert, wobei ein Azimutmoment-Offset M_{y,O} noch hinzukommt. Das Gondelazimutmoment M_{y} steht dabei vereinfachend für das Formelzeichen M_{yaw,Nac}, und der Azimutmoment-Offset M_{y,O} steht vereinfachend für das Formelzeichen M_{yaw,Offset}.

Der Azimutmoment-Offset M_{y,O} ist als Eingangsgröße dargestellt, wird in das Modell aber nicht eingegeben, sondern bildet einen Systemzustand des Modells und damit des Zustandsbeobachters, der durch den Zustandsbeobachter ermittelt werden soll. Das Gondelazimutmoment M_{y} ist ebenfalls ein Systemzustand in diesem Modell und damit dem Zustandsbeobachter.

Ebenfalls berücksichtigt das Modell 400 die Motordrehzahl n_{DRV} als Eingangsgröße, die über einen Getriebefaktor i_{g} in dem ersten Verstärkungsblock 406 in eine Gondeldrehzahl n_{G} umgerechnet wird. Der Getriebefaktor i_{g} bezeichnet das Übersetzungsverhältnis eines Verstellgetriebes zwischen Azimutmotor und Gondel. Das Übersetzungsverhältnis i_{g} kann auch mit dem Formelzeichen i_{ge} oder i_{gear} bezeichnet werden.

Im Ableitungsblock 408 wird die Gondeldrehzahl n_{G} nach der Zeit abgeleitet, so dass sich eine Gondelbeschleunigung a_{G} ergibt. Der Einfachheit halber wurde in der Darstellung ein Faktor von 2π weggelassen. In dem zweiten Verstärkungsblock 410 wird diese Gondelbeschleunigung a_{G} mit dem Massenträgheitsmoment J_{G} zum Gondelbeschleunigungsmoment M_{A} berechnet.

Das Massenträgheitsmoment J_{G} der Gondel kann auch durch das Formelzeichen J_{Nac} bezeichnet werden. Das Gondelbeschleunigungsmoment M_{A} kann auch mit dem Formelzeichen M_{acc} bezeichnet werden.

In dem Differenzblock 414 wird die Differenz aus dem Gondelazimutmoment M_{y} und dem Gondelbeschleunigungsmoment M_{A} gebildet, so dass sich ein Azimutantriebsmoment M_{AG} ergibt. Die kann in dem dritten Verstärkungsblock 416 mit dem inversen Übersetzungsverhältnis i_{g} multipliziert werden, so dass sich das Motormoment Mₘ ergibt, für das auch das Formelzeichen M_{Motor} verwendet werden kann.

Das Azimutantriebsmoment M_{AG} bzw. das Motormoment Mₘ bilden die Ausgangsgröße des Modells und damit die Ausgangsgröße des Zustandsbeobachters. Dieses geschätzte Motormoment wird mit einem erfassten Motormoment verglichen, und über eine entsprechende Rückführung in das Modell zurückgeführt, um die Systemzustände anzugleichen, also den ersten Blattfehlwinkel γ_{A}, den zweiten Blattfehlwinkel γ_{B}, den Azimutmoment-Offset M_{y,O} und das Gondelazimutmoment M_{Y}.

Erfindungsgemäß wurde somit Folgendes erkannt und folgende Lösungen vorgeschlagen.

Besonders wird automatische Detektion einer aerodynamischen Unwucht basierend auf einem Kalman-Filter und einem positionsgeregelten Azimutantrieb vorgeschlagen.

In Windenergieanlagen mit Azimut-Haltebremse resultiert eine aerodynamische Unwucht in einer Turmtorsion, welche messtechnisch schlecht zu erfassen ist. Mit dem vorgeschlagenen Einsatz von positionsgeregelten Azimutverstelleinrichtungen entfällt eine solche Haltebremse im Betrieb, da der Antrieb positionsgeregelt ist und damit gegen das Moment hält. Dadurch werden aerodynamische Unwuchten in der Azimutbewegung, die einen Regelfehler bildet, und im Antriebsmoment der Motoren, das eine Stellgröße für die Azimutverstelleinrichtung bildet, sichtbar.

Hier wird eine Lösung vorgeschlagen, bei der Kalman-Filter, die im weiteren Sinn regelungstechnische Beobachter sind, das online Schätzen von Parametern und das Beobachten von regelungstechnischen Zuständen beobachten. Ein Vorteil einer solchen Lösung ist die schlanke Struktur und einfache Parametrierung.

Mit einer positionsgeregelten Azimutverstelleinrichtung besitzt der Azimutantrieb keine Haltebremse wie bei bisherigen Azimutsystemen, denn er ist positionsgeregelt. Das bedeutet, die Motoren werden so geregelt, dass der Regelfehler (Differenz aus Sollposition und Istposition) möglichst klein ist, indem das Motormoment als Stellgröße verwendet wird. Das bedeutet, dass der Azimutantrieb bei einem Moment, z.B. aus dem Wind, etwas nachgibt und dann die Sollposition wieder ansteuert.

Das Moment des Motors ist proportional zum Strom und kann somit ermittelt werden. Außerdem hat jeder Motor einen Drehzahlsensor und durch das große Getriebeübersetzungsverhältnis von >1:1000 ist somit auch die Gondelbewegung sehr gut bekannt.

Die aerodynamische Unwucht resultiert in einem Gondelazimutmoment, welches von der Blattposition, also dem Rotorwinkel der Blattfehlstellung und der Windgeschwindigkeit abhängt. Diesem Moment wirken die Motoren des Azimutantriebs entgegen sowie die Trägheit der Gondel.

Die aerodynamische Unwucht wird mit Hilfe eines Kalman-Filters kontinuierlich und online basierend auf den Azimutbewegungen der Gondel geschätzt. Wichtige Voraussetzung ist eine Erfassung des Azimutantriebsmomentes. Alternativ könnte auch das Gondelazimutmoment erfasst werden, welches am positionsgeregelten Azimutantrieb aus der Azimutdrehzahl, bzw. ihrer Änderung, und dem Moment der Azimutmotoren ermittelt werden kann.

Das Kalman-Filter hat insgesamt 4 Zustände:
- Gondelazimutmoment
- Blattfehlstellung Blatt A
- Blattfehlstellung Blatt B
- Azimutmoment-Offset.

Hierbei ist das Gondelazimutmoment die Summe aus dem Offset sowie den aerodynamischen Momenten, die aus der Pitchfehlstellung von Blatt A, B und C resultiert, die synonym auch als Blattfehlstellung bezeichnet werden kann. Die aerodynamischen Momente werden aus dem Pitchwinkel, der synonym auch als Blattwinkel bezeichnet werden kann, der Pitchfehlstellung, den Blatteigenschaften und der Windgeschwindigkeit berechnet. Der Offset umfasst alle anderen Momente, die auf den Azimutantrieb wirken, z.B. aufgrund einer Schräganströmung.

Als "Messwert" im Sinne des Kalman-Filters wird das Azimutmotormoment verwendet, welches mit der Summe aus dem Gondelazimutmoment und dem Beschleunigungsmoment (Trägheitsmoment multipliziert mit Azimutbeschleunigung) verglichen wird. Das Kalman-Filter optimiert nun fortlaufend die internen Zustände, also die Zustände des Modells des Kalman-Filters, bis der "Messwert" aus dem Kalman-Filter mit dem echten Messwert bestmöglich übereinstimmt.

Als Ergebnis erhält man nach kurzer Zeit die Pitchfehlstellungen in Blatt A, B und C, wobei angenommen wird, dass die Summe aller Pitchfehlstellungen 0° entspricht.

Anschließend kann im Betrieb der Windenergieanlage die Pitchfehlstellung automatisiert korrigiert werden und somit die Unwucht vermieden werden.

Mit der vorgeschlagenen Lösung kann besonders Folgendes erreicht werden bzw. soll möglichst erreicht werden:
1. Optimierung des Anlagenbetriebs: Pitch-Fehlstellungen resultieren in je nach Grad der Fehlstellung in einer Ertragsreduktion der Windenergieanlage und erhöhten Schallemissionen.
2. Einhaltung der Zertifizierungsbedingungen: Die Zertifizierung der Windenergieanlage basiert momentan auf der Annahme, dass die Pitchwinkel maximal um +/-0,3° voneinander abweichen.
3. Lastreduktion / ggf. Kosteneinsparung: Durch die automatisierte Erkennung und Beseitigung der aerodynamischen Unwucht kann der angenommene Pitchfehler, also die Pitch-Fehlstellung von +/-0,3° in Simulationen, insbesondere Bladed-Lastsimulationen, reduziert werden, wodurch eine Lastreduktion erreicht wird. Eine geringere aerodynamische Unwucht reduziert die Last auf dem Azimutantrieb, wodurch potentiell weniger oder schwächere Motoren verwendet werden können.

Folgende alternative Ansätze können vermieden bzw. verbessert werden:
- Optische Verfahren: Der Pitchwinkel wird optisch überprüft → Nachteil: kein Anlagenbetrieb; aufwendige Messtechnik notwendig; manuelles Vorgehen.
- Überwachung der Turmtorsion: Wenn das Azimutmoment nicht bekannt ist, so kann das Azimutmoment auch aus der Turmtorsion ermittelt werden. Das erfordert aber aufwendige Messtechnik und ist somit recht teuer.

Als eine Aufgabe der Erfindung kann angesehen werden, das automatische Erkennen der aerodynamischen Unwucht im Betrieb der Windenergieanlage ohne zusätzliche Hardware.

Dies ermöglicht anschließend das Korrigieren der Pitch-Fehlstellung durch das Addieren eines Offsets auf den jeweiligen Pitchwinkel.

Es ergeben sich folgende Vorteile:
- Kosteneinsparung: keine Zusatzkosten im Falle einer Azimutverstelleinrichtung, die eine Positionsregelung verwendet.
- Risikominimierung: Bei sämtlichen Windenergieanlagen wird die aerodynamische Unwucht überwacht und korrigiert und nicht nur bei auffälligen Anlagen.
- Vereinfachte und verkürzte Inbetriebnahme: eine Bestimmung der aerodynamischen Unwucht durch einen externen Dienstleister kann entfallen.
- Einfache Softwarepflege und Parametrierung: Viele Parameter beschreiben die Physik der Windenergieanlage und sind bekannt oder müssen nur in Ihrer Größenordnung angegeben werden.
- Keine Abhängigkeiten zur Regelung der Windenergieanlage und keine Querempfindlichkeit zur Windscherung, -turbulenz oder Massenunwucht.
- Nach rund 10min Betrieb der Windenergieanlage sind die Pitch-Fehlstellungen aller Blätter bekannt.

Zu dem verwendeten Kalman-Filter ist Folgendes zu ergänzen.

Das Kalman-Filter arbeitet so, dass es Systemzustände seines Modells in Abhängigkeit von einem Vergleich der Ausgangsgröße des Modells und einer korrespondierenden Messgröße des Systems anpasst. Die Anpassung erfolgt so, dass eine Differenz zwischen der Ausgangsgröße des Modells und der korrespondierenden Messgröße des Systems minimiert wird. Dabei wird angenommen, dass die Messgröße und auch die zu beobachtenden Systemzustände ein Messrauschen aufweisen können.

In der Systembeschreibung und daher auch in dem Modell wird eine zeitdiskrete Beschreibung verwendet. Darin werden Größen zum aktuellen diskreten Zeitpunkt k und zum vorigen Zeitpunkt k-1 betrachtet, also zum Schritt k und zum vorigen Schritt k-1.

Darin werden die Zustände *xₖ* zum Schritt k in Abhängigkeit von den Zuständen des vorigen Schrittes k-1 und in Abhängigkeit von Eingangsgrößen *uₖ* zum aktuellen Schritt k berechnet. Das gibt folgender verallgemeinerter Zusammenhang wieder:
- ${x}_{k} = f \left({x}_{k - 1}, {u}_{k}\right)$

Bei den Blattfehlstellungen und dem Azimutmoment-Offset kann angenommen werden, dass diese zeitlich konstant sind. Dann gilt für diese xₖ=xₖ₋₁.

Die Zustände werden dabei durch den Vektor *xₖ* dargestellt, in dem alle betrachteten Zustände zusammengefasst sind. Die Eingangsgrößen werden durch den Vektor *uₖ* dargestellt. In einfachen Systemen könnte auch nur ein Zustand und/oder nur eine Eingangsgröße vorhanden sein, was hier aber nicht der Fall ist.

Weiter wird davon ausgegangen, dass die Zustände ein Rauschen aufweisen, mit der Kovarianz Q.

Messwerte *zₖ*, also Ausgangsgrößen des Modells, werden direkt in Abhängigkeit von Systemzuständen *xₖ* und Eingangsgrößen *uₖ* berechnet, was der folgende verallgemeinerte Zusammenhang wiedergibt: ${z}_{k} = h \left({x}_{k}, {u}_{k}\right)$

Die Messwerte werden durch einen Vektor *zₖ* dargestellt. Im vorliegenden Fall, bzw. gemäß einem vorgeschlagenen Aspekt ist aber nur ein Messwert bzw. nur eine Ausgangsgröße vorhanden.

Es wird angenommen, dass die Messgrößen ein Rauschen R aufweisen.

In den vorigen Gleichungen können *f*(*x*_{*k*-1},*uₖ*) und *h*(*xₖ,uₖ*) als Übertragungsfunktionen bezeichnet werden, nämlich als Zustandsübertragungsfunktion *f*(*x*_{*k*-1},*uₖ*) und als Ausgangsübertragungsfunktion *h*(*xₖ,uₖ*)*.* Ihre verallgemeinerte Darstellung deutet an, dass die Übertragungsfunktionen nichtlinear sein können.

Die Funktionsweise des Kalman-Filters kann in zwei Teile unterteilt werden.

Als erster Teil kann eine Prädiktion angesehen werden. Dabei wird eine Linearisierung der Übertragungsfunktionen durchgeführt: ${F}_{k} = {\left.\frac{\partial f \left(x, u\right)}{\partial x}\right|}_{{x}_{k - 1} , {u}_{k}} und {H}_{k} = {\left.\frac{\partial h \left(x, u\right)}{\partial x}\right|}_{{x}_{k} , {u}_{k}}$

Die Linearisierung erfolgt also durch partielle Ableitung der Funktionen nach den jeweiligen Zuständen und zwar an den Stellen *xₖ₋₁* bzw. *xₖ* und *uₖ.* Es ergeben sich eine linearisierte Zustandsübertragungsmatrix *Fₖ* und eine Ausgangsübertragungsmatrix *Hₖ.*

Die Zustände *xₖ* werden durch den oben beschriebenen Zusammenhang prädiziert, bzw. dafür berechnet, also mit dem verallgemeinerten Zusammenhang: ${x}_{k} = f \left({x}_{k - 1}, {u}_{k}\right)$

Außerdem wird eine Kovarianz der beobachteten Zustände als Kovarianzmatrix *Pₖ* der Schätzwerte prädiziert. Die Kovarianzmatrix *Pₖ* der Schätzwerte kann synonym auch als Kovarianzmatrix *Pₖ* der beobachteten Zustände bezeichnet werden. Zur Prädiktion kann sie dazu berechnet werden aus einer vorigen Kovarianzmatrix *Pₖ₋₁,* der linearisierten Zustandsübertragungsmatrix *Fₖ,* und der Kovarianzmatrix *Qₖ* des Prozessrauschens, die somit ein Prozessrauschen kennzeichnet, das den aktuellen Systemzuständen durch Eingangsgrößen überlagert ist. Die Kovarianzmatrix *Pₖ* der Schätzgrößen berechnet sich nach der Gleichung: ${P}_{k} = {F}_{k} ∗ {P}_{k - 1} ∗ {F}_{k}^{T} + {Q}_{k}$

Als zweiter Teil kann die Korrektur, nämlich der Zustände, angesehen werden.

Hierbei wird zunächst eine Residual-Kovarianzmatrix *Sₖ* berechnet, nämlich aus der aktuellen Ausgangsübertragungsmatrix *H_{K},* der Kovarianzmatrix *P_{K}* der Schätzwerte und einer Messgrößenkovarianzmatrix *Rₖ*: ${S}_{k} = {H}_{k} {P}_{k} {H}_{k}^{T} + {R}_{k}$

Mit Hilfe der Kovarianzmatrix *Pₖ* der Schätzwerte der Ausgangsübertragungsmatrix *H_{K}* und Residual-Kovarianzmatrix *Sₖ* kann die Rückführungsverstärkungsmatrix *Kₖ* berechnet werden, die auch als optimale Verstärkung bezeichnet werden kann: ${K}_{k} = {P}_{k} {H}_{k}^{T} {S}_{k}^{- 1}$

Darauf basierend werden in dem Beobachter die Zustände *xₖ* angepasst, was auch als Aktualisierung dieser Zustände *xₖ* bezeichnet werden kann. Dazu wird eine Differenz aus der gemessenen Ausgangsgröße *zₖ* und ihrer Berechnung aus den geschätzten Zuständen *xₖ* des Beobachters und den Eingangsgrößen *uₖ* des Beobachters, nach der Ausgangsübertragungsfunktion *h*(*xₖ,uₖ*) berechnet, mit folgender Gleichung: ${x}_{k} = {x}_{k} + {K}_{k} \left({z}_{k}-h\left({x}_{k}, {u}_{k}\right)\right)$

Es wird somit eine Differenz zwischen gemessener und beobachteter Ausgangsgröße mit der optimalen Verstärkung multipliziert und auf die aktuellen Zustände aufaddiert.

Schließlich erfolgt, in Vorbereitung des nächsten Schrittes, eine Aktualisierung der aktuellen Kovarianzmatrix *Pₖ* der Schätzwerte, also der beobachteten Systemzustände, nach folgender Gleichung: ${P}_{k} = \left(I-{K}_{k}{H}_{k}\right) {P}_{k}$

Die so aktualisierte Kovarianzmatrix *Pₖ* der Schätzwerte wird dann im nächsten Schritt benötigt, um im ersten Teil, nämlich der Prädiktion, die neue Kovarianzmatrix zu prädizieren, also zu berechnen, wie oben gezeigt wurde. Dafür bildet die so aktualisierte Kovarianzmatrix *Pₖ* der Schätzwerte dieses Schrittes im nächsten Schritt die vorige Kovarianzmatrix *Pk-1.*

All diese Berechnungen werden schrittweise wiederholt, sodass der jetzt aktuelle Schritt dann der vorige Schritt ist.

Der Kalman-Filter ist somit ein rekursives Verfahren, in dem die Rückführungsverstärkungsmatrix *Kₖ*, die auch als Korrekturmatrix, oder Korrekturvektor bezeichnet werden kann, in jedem Schritt neu bestimmt bzw. angepasst wird.

Zusammenfassend sind jeweils zum Schritt k:
*xₖ*: beobachtete Zustände
*uₖ*: Eingangswert
*zₖ*: Ausgangsgröße
*Fₖ*: Zustandsübertragungsmatrix
*Hₖ*: Ausgangsübertragungsmatrix
*Kₖ*: Rückführungsverstärkungsmatrix
*Pₖ*: Kovarianzmatrix der Schätzwerte
*Oₖ*: Kovairanzmatrix des Prozessrauschens
*Rₖ:* Kovarianzmatrix der Ausgangsgröße
*Sₖ*: Residual-Kovarianzmatrix
*I*: Einheitsmatrix (zu jedem Schritt)

Für den in Figur 4 beschriebenen Beispielfall können folgende Anfangswerte verwendet werden.

Pₖ kann eine 4x4 Matrix sein, bei der für P₀ nur die Hauptdiagonale besetzt sein kann. Als Anfangswerte, also Werte in der Hauptdiagonalen können Werte gemäß einer groben Erwartungshaltung gewählt werden, nämlich wie gut die Anfangswerte x₀=0 sind. Bspw. können die Werte in der Hauptdiagonalen gewählt werden als P₀(1,1)=(10^6)^2; P₀(2,2)=(10^6)^2; P₀(3,3)=0.1^2; P₀(4,4)=0.1^2

Auf genaue Anfangswerte kommt es nicht an, grundsätzlich entscheidend ist mehr die Größenordnung als der richtige Wert.

Qₖ und Rₖ können zur Vereinfachung als konstant angenommen werden. Qₖ charakterisiert, wie schnell sich die Zustände unabhängig von den Modellgleichungen ändern können. Hier kann die Hauptdiagonale besetzt sein mit: Q₀(1,1)=0; Q₀(2,2)= Q₀(3,3)=(10^(-7))^2; Q₀(4,4)=(10^2)^2

Rₖ beschreibt das Messrauschen und als Anfangswert kann bspw. (10^4)^2 angenommen werden.

Gemäß einem Aspekt ergibt sich, auch Bezug nehmend auf Figur 4: ${x}_{k} = {\left[{M}_{y}, {M}_{y , o}, {γ}_{A}, {γ}_{B}\right]}^{T}$ ${u}_{k} = {\left[φ, {v}_{W}, {n}_{R}, α, {n}_{DRV}\right]}^{T}$ ${z}_{k} = {M}_{m}$

Die Übertragungsfunktionen ergeben sich aus der oben gezeigten Systembeschreibung, auch aus den Zusammenhängen gemäß Figur 4.

Es ist anzumerken, dass bei Verwendung eines Luenberger Beobachters, kein Rauschen berücksichtigt wird, weder für Zustände, Eingangsgrößen oder Ausgangsgrößen. Daher ist es möglich, die Beobachterabweichung über einen festen Korrekturvektor zurückzuführen. Die rekursive Veränderung der Rückführungsverstärkungsmatrix *Kₖ* und die dazu notwendigen, rekursiven Berechnungen, die beim Kalmanfilter nötig sind, können beim Luenberger Beobachter entfallen. Der feste Korrekturvektor kann vorab berechnet werden.

Systemzustände können vereinfachend und synonym auch als Zustände bezeichnet werden. Sie beinhalten auch die Zustände des Beobachters.

## Patentansprüche

1. Verfahren zum Erfassen wenigstens einer Blattfehlstellung (γ_{A}, γ_{B}, γ_{C}) eines Rotorblattes (108) eines
Rotors (106) einer Windenergieanlage (100) mit mehreren in ihrem Blattwinkel verstellbaren Rotorblättern (108), wobei
- die Blattfehlstellung eine Blattwinkelabweichung eines erfassten Blattwinkels des Rotorblattes von einem Referenzblattwinkel beschreibt,
- die Windenergieanlage eine Gondel (104) mit dem Rotor und einer Azimutverstelleinrichtung aufweist, um die Gondel in einer einen Azimutwinkel aufweisenden Azimutausrichtung zu verstellen, und
- zur Verstellung der Azimutausrichtung der Azimutwinkel mittels der Azimutverstelleinrichtung einem vorgebbaren Azimutsollwinkel nachgeführt wird, und
- die Blattfehlstellung in Abhängigkeit von einer Azimutbewegung der Gondel erfasst wird, **dadurch gekennzeichnet, dass**
zur Erfassung der Blattfehlstellung ein Zustandsbeobachter verwendet wird, wobei der Zustandsbeobachter zur Erfassung der Blattfehlstellung wenigstens
- ein Gondelazimutmoment (M_{y}) und
- eine Blattfehlstellung (γA, γB, γC)
als Zustandsgrößen aufweist.

2. Verfahren nach Anspruch 1, **dadurch gekennzeichnet, dass**
- die Blattfehlstellung in Abhängigkeit von einer Azimutbewegung der Gondel dadurch erfasst wird, dass
- eine Verstellaktivität der Azimutverstelleinrichtung erfasst wird, insbesondere dass
- eine Verstellaktivität wenigstens eines Azimutmotors der Azimutverstelleinrichtung erfasst wird.

3. Verfahren nach Anspruch 1 oder 2, **dadurch gekennzeichnet, dass**
- die Azimutverstelleinrichtung so ausgebildet ist, dass sie einer Veränderung der Azimutausrichtung der Gondel durch Windeinwirkung durch eine Positionsregelung des Azimutwinkels entgegenwirkt, insbesondere, dass
- die Azimutverstelleinrichtung keine Haltebremse aufweist und/oder
- das Nachführen des Azimutwinkels kontinuierlich erfolgt.

4. Verfahren nach einem der vorstehenden Ansprüche, **dadurch gekennzeichnet, dass**
- der Zustandsbeobachter
- das Gondelazimutmoment,
- ein Azimutmoment-Offset und
- je eine Blattfehlstellung von zwei Rotorblättern
als Zustandsgrößen aufweist, wobei das Gondelazimutmoment in eine Gondeldrehrichtung weist und sich zusammensetzt aus
- je einer in Gondeldrehrichtung gerichteten Azimutdrehmomentkomponente eines aerodynamischen Blattdrehmomentes (M_{aero,A}, M_{aero,B}, M_{aero,C}) jedes Rotorblattes, und
- dem Azimutmoment-Offset, sodass
- eine Summe aus den Azimutdrehmomentkomponenten aller Rotorblätter und dem Azimutmoment-Offset das Gondelazimutmoment bildet.

5. Verfahren nach einem der vorstehenden Ansprüche, **dadurch gekennzeichnet, dass**
zur Erfassung der Blattfehlstellung als ein bzw. als der Zustandsbeobachter ein Kalman-Filter verwendet wird.

6. Verfahren nach einem der vorstehenden Ansprüche, **dadurch gekennzeichnet, dass**
- eine bzw. die Verstellaktivität der Azimutverstelleinrichtung unter Auswertung eines Azimutantriebsmomentes erfolgt, das ein Antriebsmoment bezeichnet, mit dem die Gondel in ihrer Azimutausrichtung verstellt wird, wobei insbesondere
- das Azimutantriebsmoment in Abhängigkeit von einem Motorstrom oder mehreren Motorströmen oder einem Motormoment oder mehreren Motormomenten des wenigstens einen Azimutmotors bestimmt wird, insbesondere, dass
- das Azimutantriebsmoment als Produkt aus dem Motorstrom, einer Summe der mehreren Motorströme, dem Motormoment oder einer Summe der mehreren Motormomente und einem Proportionalitätsfaktor bestimmt wird.

7. Verfahren nach einem der vorstehenden Ansprüche, **dadurch gekennzeichnet, dass**
- ein bzw. das Azimutantriebsmoment als Ausgangsgröße eines bzw. des Zustandsbeobachters verwendet wird, sodass
- der Zustandsbeobachter ein geschätztes Azimutantriebsmoment, oder eine dazu repräsentative, insbesondere dazu proportionale Azimutantriebsgröße ausgibt, und
- eine Differenz aus erfasstem und geschätztem Azimutantriebsmoment bzw. eine Differenz aus dazu jeweils repräsentativer, insbesondere proportionaler, erfasster und geschätzter Azimutantriebsgröße als Beobachtungsfehler zur Anpassung von Beobachterzuständen in den Zustandsbeobachter zurückgeführt wird.

8. Verfahren nach einem der vorstehenden Ansprüche, **dadurch gekennzeichnet, dass**
einem bzw. dem Zustandsbeobachter zur Erfassung der Blattfehlstellung eine Modellbeschreibung zu Grunde liegt, in der
- für jedes Rotorblatt ein aerodynamisches Blattdrehmoment Mₐₑᵣₒ beschrieben wird durch die Gleichung: ${M}_{aero} = \frac{1}{3} ∗ \frac{1}{2} ∗ π ∗ {ρ}_{air} ∗ {c}_{s} \left(λ,α+γ\right) ∗ {{l}_{bl}}^{3} ∗ {\left({v}_{Wind}+{ω}_{Yaw}∗{l}_{bl}∗sin\left(φ\right)\right)}^{2}$
*mit:*
*ρₐᵢᵣ = Luftdichte* $λ = \frac{{ω}_{Rot} ∗ {l}_{bl}}{{v}_{Wind}} = Schnelllaufzahl \left(\begin{matrix}{ω}_{Rot} = Rotorgeschwindigkeit bzw . Rotordreh - \\ zahl in rad / s\end{matrix}\right)$
*l_{bl} = Rotorblattlänge*
*α = Blattwinkel*
*γ = Blattfehlstellung des Rotorblattes*
*cₛ(λ, α*) *= Aerodynamische Eigenschaften des Rotorblattes ω_{Yaw}* * *l_{bl}* * *sin*(*φ*) *= Scheinbare Windgeschwindigkeit durch eine Azimutbewegung am Rotorblatt; mit φ*: Rotorwinkel
wobei jedes Blattdrehmoment Mₐₑᵣₒ ein durch das Rotorblatt auf den Rotor wirkendes Drehmoment beschreibt, nämlich in einer Drehrichtung quer zur Drehachse des Rotors, und wobei
insbesondere vorgesehen ist, dass
- die Summe der Blattfehlstellungen aller Rotorblätter null ist und sich die Blattfehlstellung einer der Rotorblätter aus den Blattfehlstellungen der übrigen Rotorblätter berechnet, wobei
in der Modellbeschreibung außerdem Berechnungen zu Grunde liegen, in denen
- jedes der Blattdrehmomente jeweils mittels einer Winkeltransformation in Abhängigkeit von einem auf das jeweilige Blatt bezogenen Rotorwinkel des Rotors in eine in Gondeldrehrichtung gerichtete Azimutdrehmomentkomponente transformiert wird,
- ein bzw. das Gondelazimutmoment als Summe aus den Azimutdrehmomentkomponenten und einem bzw. dem Azimutmoment-Offset berechnet wird,
- in Abhängigkeit von einer Änderung einer Azimutdrehzahl und einem Massenträgheitsmoment der Gondel ein Gondelbeschleunigungsmoment berechnet wird,
- in Abhängigkeit von einer Differenz zwischen dem Gondelazimutmoment und dem Gondelbeschleunigungsmoment ein Azimutantriebsmoment, bestimmt wird, wobei
- das Azimutantriebsmoment, oder eine dazu repräsentative, insbesondere proportionale Größe, eine Ausgangsgröße des Modells des Zustandsbeobachters bildet, und insbesondere
- zwei der Blattfehlstellungen, der Azimutmoment-Offset und das Azimutmoment Systemzustände des Modells bilden.

9. Verfahren nach einem der vorstehenden Ansprüche, **dadurch gekennzeichnet, dass**
dem Zustandsbeobachter eine Modellbeschreibung zu Grunde liegt, die durch folgendes Gleichungssystem beschrieben werden kann, wobei der Rotor drei Rotorblätter A, B und C aufweist: ${M}_{aero , A} = f \left({v}_{w},{n}_{R ,}α,{γ}_{A}\right) ; {M}_{aero , B} = f \left({v}_{w},{n}_{R ,}α,{γ}_{B}\right) ; {M}_{aero , C} = f \left({v}_{w},{n}_{R ,}α,{γ}_{C}\right) ;$ ${M}_{yaw , A} = f \left({M}_{aero , A , φ}\right) ; {M}_{yaw , B} = f \left({M}_{aero , B , φ}\right) ; {M}_{yaw , C} = f \left({M}_{aero , C , φ}\right)$ ${γ}_{c} = - {γ}_{A} - {γ}_{B}$ ${M}_{yaw , Nac} = {M}_{yaw , A} + {M}_{yaw , B} + {M}_{yaw , C} + {M}_{yaw , off}$ ${M}_{acc} = {i}_{g} . 2 π \frac{{dn}_{DRV}}{dt} . {J}_{Nac}$ ${M}_{DRV} = \frac{1}{{i}_{g}} . \left({M}_{yaw , Nac}-{M}_{acc}\right)$
mit
*M_{aero,A}, M_{aero,B}* und *M_{aero,C}*: aerodynamisches Blattdrehmoment Mₐₑᵣₒ des Rotorblattes A, B bzw. C;
*v_{w}*: Windgeschwindigkeit; *n_{R}*: Rotordrehzahl; α: Blattwinkel; *φ*: Rotorwinkel
*M_{yaw,A}, M_{yaw,B}* und *M_{yaw,C}*: Azimutdrehmomentkomponente des Rotorblattes A, B bzw. C;
*γ_{A}*, γ*_{B} und γ_{c}*: Blattfehlstellung des Rotorblattes A, B bzw. C;
*M_{yaw,off}*: Azimutmoment-Offset;
*M_{yaw,Nac}:* Gondelazimutmoment;
*M_{acc}*: Gondelbeschleunigungsmoment; ${M}_{acc} = {i}_{g} . 2 π \frac{{dn}_{DRV}}{dt} . {J}_{Nac} ;$
*i_{g}*: Getriebeübersetzung zwischen Azimutmotor und Gondel;
*n_{DRV}:* Drehzahl Azimutmotor;
*J_{Nac}*: Massenträgheitsmoment Gondel
*M_{DRV}* : Motormoment Azimutmotor.

10. Verfahren zum Korrigieren wenigstens einer Blattfehlstellung eines Rotorblattes eines Rotors einer Windenergieanlage mit mehreren in ihrem Blattwinkel verstellbaren Rotorblättern, wobei
- die Blattfehlstellung eine Blattwinkelabweichung eines erfassten Blattwinkels des Rotorblattes von einem Referenzblattwinkel beschreibt,
- die Windenergieanlage eine Gondel mit dem Rotor und einer Azimutverstelleinrichtung aufweist, um die Gondel in einer einen Azimutwinkel aufweisenden Azimutausrichtung zu verstellen, und
- zur Verstellung der Azimutausrichtung der Azimutwinkel mittels der Azimutverstelleinrichtung einem vorgebbaren Azimutsollwinkel nachgeführt wird,
- die Blattfehlstellung in Abhängigkeit von einer Azimutbewegung der Gondel erfasst wird, nämlich mit einem Verfahren nach einem der vorstehenden Ansprüche, und
- zu jedem Rotorblatt
- ein Korrekturwinkel in Abhängigkeit von der jeweiligen erfassten Blattfehlstellung bestimmt wird und
- der Blattwinkel um den Korrekturwinkel korrigiert wird, und/oder
- eine erfasste Blattfehlstellung mit einem vorgebbaren Abweichungsgrenzwert verglichen wird, und eine Fehler- oder Warnmeldung erzeugt wird, wenn die erfasste Blattfehlstellung dem Betrage nach größer als der Abweichungsgrenzwert ist.

11. Verfahren nach Anspruch 10, **dadurch gekennzeichnet, dass**
- der Korrekturwinkel der erfassten Blattfehlstellung entspricht, oder
- der Korrekturwinkel der erfassten Blattfehlstellung nachgeführt wird, insbesondere mit einer Verzögerungsfunktion, die insbesondere eine Zeitkonstante von wenigstens einer Stunde aufweist.

12. Windenergieanlage (100) mit einem Rotor (106) mit mehreren in ihrem Blattwinkel verstellbaren Rotorblättern (108), wobei
- die Windenergieanlage eine Gondel (104) mit dem Rotor und einer Azimutverstelleinrichtung aufweist, um die Gondel in einer einen Azimutwinkel aufweisenden Azimutausrichtung zu verstellen, und
- zur Verstellung der Azimutausrichtung der Azimutwinkel mittels der Azimutverstelleinrichtung einem vorgebbaren Azimutsollwinkel nachgeführt wird, wobei
- die Windenergieanlage eine Steuereinrichtung aufweist, die dazu vorbereitet ist, ein Verfahren nach einem der vorstehenden Ansprüche auszuführen.

## Claims

1. Method for detecting at least one blade misalignment (γ_{A}, γ_{B,} γ_{C}) of a rotor blade (108) of a rotor (106) of a wind turbine (100) having multiple rotor blades (108) adjustable in their blade angle, wherein
- the blade misalignment describes a blade angle deviation of a detected blade angle of the rotor blade from a reference blade angle,
- the wind turbine includes a gondola (104) having the rotor and an azimuth adjustment device in order to adjust the gondola in an azimuth alignment having an azimuth angle, and
- to adjust the azimuth alignment, the azimuth angle is tracked by means of the azimuth adjustment device to a predeterminable azimuth setpoint angle, and
- the blade misalignment is detected as a function of an azimuth movement of the gondola, **characterized in that**
a state observer is used to detect the blade misalignment, wherein
the state observer for detecting the blade misalignment includes at least
- a gondola azimuth torque (M_{y}) and
- a blade misalignment (γ_{A}, γ_{B,} γ_{C})
as state variables.

2. Method according to Claim 1, **characterized in that**
- the blade misalignment is detected as a function of an azimuth movement of the gondola **in that**
- an adjustment activity of the azimuth adjustment device is detected, in particular that
- an adjustment activity of at least one azimuth motor of the azimuth adjustment device is detected.

3. Method according to Claim 1 or 2, **characterized in that**
- the azimuth adjustment device is designed so that it counteracts a change of the azimuth alignment of the gondola due to wind action by a position regulation of the azimuth angle, in particular that
- the azimuth adjustment device does not have a holding brake and/or
- the tracking of the azimuth angle takes place continuously.

4. Method according to any one of the preceding claims, **characterized in that**
- the state observer includes
- the gondola azimuth torque,
- an azimuth torque offset, and
- one blade misalignment of each of two rotor blades
as state variables, wherein the gondola azimuth torque points in a gondola rotational direction and is composed of
- one azimuth torque component, directed in the gondola rotational direction, of an aerodynamic blade torque (M_{aero,A}, M_{aero,B}, M_{aero,C}) of each rotor blade, and
- the azimuth torque offset, so that
- a sum of the azimuth torque components of all rotor blades and the azimuth torque offset forms the gondola azimuth torque.

5. Method according to any one of the preceding claims, **characterized in that**
a Kalman filter is used as a or as the state observer for detecting the blade misalignment.

6. Method according to any one of the preceding claims, **characterized in that**
- a or the adjustment activity of the azimuth adjustment device is produced with evaluation of an azimuth drive torque which designates a drive torque using which the gondola is adjusted in its azimuth alignment, wherein in particular
- the azimuth drive torque is determined as a function of one motor current or multiple motor currents or one motor torque or multiple motor torques of the at least one azimuth motor, in particular that
- the azimuth drive torque is determined as the product of the motor current, a sum of the multiple motor currents, the motor torque, or a sum of the multiple motor torques and a proportionality factor.

7. Method according to any one of the preceding claims, **characterized in that**
- a or the azimuth drive torque is used as an output variable of a or the state observer, so that
- the state observer outputs an estimated azimuth drive torque, or an azimuth drive variable representative thereof, in particular proportional thereto, and
- a difference of detected and estimated azimuth drive torque or a difference of representative thereof, in particular proportional thereto, detected and estimated azimuth drive variable is returned as an observation error for adapting observer states in the state observer.

8. Method according to any one of the preceding claims, **characterized in that**
a model description underlies a or the state observer for detecting the blade misalignment, in which
- for each rotor blade an aerodynamic blade torque Mₐₑᵣₒ is described by the equation:
${M}_{aero} = \frac{1}{3} ∗ \frac{1}{2} ∗ π ∗ {ρ}_{air} ∗ {c}_{s} \left(λ,α+γ\right) ∗ {{l}_{bl}}^{3} ∗ {\left({v}_{Wind}+{ω}_{Yaw}∗{l}_{bl}∗sin\left(φ\right)\right)}^{2}$
*with:*
*ρₐᵢᵣ* = *air density* $λ = \frac{{ω}_{Rot} ∗ {l}_{bl}}{{v}_{Wind}} = speed ratio \left({ω}_{Rot}=rotor velocity or rotor speed in rad/s\right)$
*l_{bl} = rotor blade length*
*α* = *blade angle*
*γ* = *blade misalignment of the rotor blade*
*cₛ*(*λ*, *α*) *= aerodynamic properties of the rotor blade*
*ω_{Yaw}* * *l_{bl}* * *sin*(*φ*) *= apparent wind velocity due to an azimuth movement at the rotor blade; with φ: rotor angle*
wherein each blade torque Mₐₑᵣₒ describes a torque acting on the rotor due to the rotor blade, namely in a rotational direction transverse to the axis of rotation of the rotor, and wherein it is provided in particular that
- the sum of the blade misalignments of all rotor blades is zero and the blade misalignment of one of the rotor blades is calculated from the blade misalignments of the remaining rotor blades, wherein
in addition calculations underlie the model description, in which
- each of the blade torques is transformed by means of an angle transformation as a function of a rotor angle of the rotor related to the respective blade into an azimuth torque component directed in the gondola rotational direction,
- a or the gondola azimuth torque is calculated as the sum of the azimuth torque components and a or the azimuth torque offset,
- a gondola acceleration torque is calculated as a function of a change of an azimuth speed and a mass moment of inertia of the gondola,
- an azimuth drive torque is determined as a function of a difference between the gondola azimuth torque and the gondola acceleration torque, wherein
- the azimuth drive torque, or a variable representative thereof, in particular proportional thereto, forms an output variable of the model of the state observer, and in particular
- two of the blade misalignments, the azimuth torque offset, and the azimuth torque form system states of the model.

9. Method according to any one of the preceding claims, **characterized in that**
a model description underlies the state observer, which can be described by the following equation system, wherein the rotor includes three rotor blades A, B, and C: ${M}_{aero , A} = f \left({v}_{w},{n}_{R ,}α,{γ}_{A}\right) ; {M}_{aero , B} = f \left({v}_{w},{n}_{R ,}α,{γ}_{B}\right) ; {M}_{aero , C} = f \left({v}_{w},{n}_{R ,}α,{γ}_{C}\right) ;$ ${M}_{yaw , A} = f \left({M}_{aero , A , φ}\right) ; {M}_{yaw , B} = f \left({M}_{aero , B , φ}\right) ; {M}_{yaw , C} = f \left({M}_{aero , C , φ}\right)$ ${γ}_{c} = - {γ}_{A} - {γ}_{B}$ ${M}_{yaw , Nac} = {M}_{yaw , A} + {M}_{yaw , B} + {M}_{yaw , C} + {M}_{yaw , off}$ ${M}_{acc} = {i}_{g} . 2 π \frac{{dn}_{DRV}}{dt} . {J}_{Nac}$ ${M}_{DRV} = \frac{1}{{i}_{g}} . \left({M}_{yaw , Nac}-{M}_{acc}\right)$
with
*M_{aero,A}, M_{aero,B}* and *M_{aero,C}*: aerodynamic blade torque Mₐₑᵣₒ of the rotor blade A, B, or C, respectively;
*v_{w}*: wind velocity; *n_{R}*: rotor speed; α: blade angle; *φ*: rotor angle
*M_{yaw,A}*, *M_{yaw,B},* and *M_{yaw,C}*: azimuth torque component of the rotor blade A, B, or C, respectively;
γ*_{A},* γ*_{B} and* γ*_{c}*: blade misalignment of the rotor blade A, B, or C, respectively;
*M_{yaw,off}*: azimuth torque offset;
*M_{yaw,Nac}*: gondola azimuth torque;
*M_{acc}*: gondola acceleration torque; ${M}_{acc} = {i}_{g} . 2 π \frac{{dn}_{DRV}}{dt} . {J}_{Nac} ;$
*i_{g}*: transmission ratio between azimuth motor and gondola;
*n_{DRV}*: speed of azimuth motor;
*J_{Nac}*: mass moment of inertia of gondola
*M_{DRV}* : motor torque of azimuth motor.

10. Method for correcting at least one blade misalignment of a rotor blade of a rotor of a wind turbine having multiple rotor blades adjustable in their blade angle, wherein
- the blade misalignment describes a blade angle deviation of a detected blade angle of the rotor blade from a reference blade angle,
- the wind turbine includes a gondola having the rotor and an azimuth adjustment device in order to adjust the gondola in an azimuth alignment having an azimuth angle, and
- to adjust the azimuth alignment, the azimuth angle is tracked by means of the azimuth adjustment device to a predeterminable azimuth setpoint angle,
- the blade misalignment is detected as a function of an azimuth movement of the gondola, namely by using a method according to any one of the preceding claims, and
- for each rotor blade
- a correction angle is determined as a function of the respective detected blade misalignment and
- the blade angle is corrected by the correction angle, and/or
- a detected blade misalignment is compared to a predeterminable deviation limiting value, and an error or warning message is generated if the detected blade misalignment is greater in absolute value than the deviation limiting value.

11. Method according to Claim 10, **characterized in that**
- the correction angle corresponds to the detected blade misalignment, or
- the correction angle is tracked to the detected blade misalignment, in particular with a delay function, which in particular includes a time constant of at least one hour.

12. Wind turbine (100) having a rotor (106) having multiple rotor blades (108) adjustable in their blade angle, wherein
- the wind turbine includes a gondola (104) having the rotor and an azimuth adjustment device in order to adjust the gondola in an azimuth alignment having an azimuth angle, and
- to adjust the azimuth alignment, the azimuth angle is tracked by means of the azimuth adjustment device to a predeterminable azimuth setpoint angle, wherein
- the wind turbine includes a control unit, which is prepared to carry out a method according to any one of the preceding claims.

## Revendications

1. Procédé de détection d'au moins un défaut d'alignement de pale (γ_{A}, γ_{B}, γ_{C}) d'une pale de rotor (108) d'un rotor (106) d'une éolienne (100) avec plusieurs pales de rotor (108) à angle de pale ajustable, dans lequel
- le défaut d'alignement de pale décrit un écart d'angle de pale d'un angle de pale détecté de la pale de rotor par rapport à un angle de pale de référence,
- l'éolienne présente une nacelle (104) avec le rotor et un dispositif d'ajustement d'azimut pour ajuster la nacelle dans une orientation d'azimut présentant un angle d'azimut, et
- pour l'ajustement de l'orientation d'azimut, l'angle d'azimut suit un angle de consigne d'azimut au moyen du dispositif d'ajustement d'azimut, et
- le défaut d'alignement de la pale est détecté en fonction d'un mouvement d'azimut de la nacelle, **caractérisé en ce qu'**un observateur d'état est utilisé pour détecter le défaut d'alignement de pale, dans lequel l'observateur d'état présente, pour détecter le défaut d'alignement de pale, au moins
- un couple d'azimut de nacelle (M_{y}) et
- une mauvaise position de pale (γA, γB, γC)
comme grandeurs d'état.

2. Procédé selon la revendication 1, **caractérisé en ce que**
- le défaut d'alignement de pale est détecté en fonction d'un mouvement d'azimut de la nacelle **en ce que**
- une activité d'ajustement du dispositif d'ajustement d'azimut est détectée, en particulier que
- une activité d'ajustement d'au moins un moteur d'azimut du dispositif d'ajustement d'azimut est détectée.

3. Procédé selon la revendication 1 ou 2, **caractérisé en ce que**
- le dispositif d'ajustement d'azimut est réalisé de telle sorte qu'il s'oppose à une modification de l'orientation d'azimut de la nacelle sous l'effet du vent par une régulation de position de l'angle d'azimut, en particulier que
- le dispositif d'ajustement d'azimut ne présente pas de frein de maintien et/ou
- le suivi de l'angle d'azimut est effectué en continu.

4. Procédé selon l'une quelconque des revendications précédentes, **caractérisé en ce que**
- l'observateur d'état présente
- le couple d'azimut de nacelle,
- un décalage du couple d'azimut et
- respectivement une mauvaise position de pale de deux pales de rotor comme grandeurs d'état, dans lequel le couple d'azimut de nacelle pointe dans une direction de rotation de nacelle et se compose
- d'un composant de couple de rotation d'azimut orienté dans la direction de rotation de nacelle d'un couple de rotation de pale aérodynamique (M_{aero,A}, M_{aero,B}, M_{aero,C}) de chaque pale de rotor, et
- du décalage du couple d'azimut, si bien
- qu'une somme des composants de couple de rotation d'azimut de toutes les pales de rotor et du décalage du couple d'azimut forme le couple d'azimut de la nacelle.

5. Procédé selon l'une quelconque des revendications précédentes, **caractérisé en ce que**
un filtre de Kalman est utilisé pour détecter le défaut d'alignement de pale en tant qu'un ou l'observateur d'état.

6. Procédé selon l'une quelconque des revendications précédentes, **caractérisé en ce que**
- une ou l'activité d'ajustement du dispositif d'ajustement d'azimut est effectuée en évaluant un couple d'entraînement d'azimut, qui désigne un couple d'entraînement avec lequel la nacelle est ajustée dans son orientation d'azimut, dans lequel en particulier
- le couple d'entraînement d'azimut est déterminé en fonction d'un courant de moteur ou de plusieurs courants de moteur ou d'un couple de moteur ou de plusieurs couples de moteur de l'au moins un moteur d'azimut, en particulier que
- le couple d'entraînement d'azimut est déterminé en tant que produit du courant de moteur, d'une somme de plusieurs courants de moteur, du couple de moteur ou d'une somme des plusieurs couples de moteur et d'un facteur de proportionnalité.

7. Procédé selon l'une quelconque des revendications précédentes, **caractérisé en ce que**
- un ou le couple d'entraînement d'azimut est utilisé en tant que grandeur de sortie d'un ou de l'observateur d'état, si bien que
- l'observateur d'état délivre un couple d'entraînement d'azimut estimé, ou une grandeur d'entraînement d'azimut représentative, en particulier proportionnelle, et
- une différence entre le couple d'entraînement d'azimut détecté et estimé ou une différence entre une grandeur d'entraînement d'azimut respectivement représentative, en particulier proportionnelle, détectée et estimée, est ramenée dans l'observateur d'état en tant qu'erreur d'observation pour l'adaptation des états d'observateur.

8. Procédé selon l'une quelconque des revendications précédentes, **caractérisé en ce que**
un ou à l'observateur d'état pour détecter la mauvaise position de pale repose sur une description de modèle, dans laquelle
- pour chaque pale de rotor, un couple de rotation de pale aérodynamique Maero est décrit par l'équation : ${M}_{aero} = \frac{1}{3} ∗ \frac{1}{2} ∗ π ∗ {ρ}_{air} ∗ {c}_{s} \left(λ,α+γ\right) ∗ {{l}_{bl}}^{3} ∗ {\left({v}_{Wind}+{ω}_{Yaw}∗{l}_{bl}∗sin\left(φ\right)\right)}^{2}$
*avec :* $\begin{matrix}{ρ}_{air} = densité de l ′ air \\ λ = \frac{{ω}_{Rot} ∗ {l}_{bl}}{{v}_{Wind}} = vitesse rapide \left(\begin{matrix}{ω}_{rouge} = vitesse de rotor ou vitesse de rotation \\ de rotor en rad / s\end{matrix}\right)\end{matrix}$
*I_{bl}* = *longueur de pale de rotor*
*α* = *angle de pale*
*y* = *mauvaise position de pale de la pale de rotor*
*cₛ (λ, α) = propriétés aérodynamiques de la pale de rotor*
*ω_{Yaw} * I_{bl}* * *sin*(φ) = *Vitesse apparente du vent due au mouvement d'azimut de la pale de rotor; avec* φ *: angle de rotor*
dans lequel chaque couple de rotation de pale Mₐₑᵣₒ décrit un couple de rotation agissant par la pale de rotor sur le rotor, à savoir dans une direction de rotation transversalement à l'axe de rotation du rotor, et dans lequel il est prévu en particulier que
- la somme des mauvaises positions de pale de toutes les pales de rotor est nulle et la mauvaise position de pale de l'une des pales de rotor est calculée à partir des mauvaises positions de pale des pales de rotor restantes, dans lequel la description du modèle repose par ailleurs sur des calculs dans lesquels
- chacun des couples de rotation de pale est transformé en un composant de couple de rotation d'azimut orienté dans la direction de rotation de nacelle au moyen d'une transformation d'angle en fonction d'un angle de rotor du rotor relatif à la pale respective,
- un ou le couple d'azimut de nacelle est calculé en tant que la somme des composants de couple de rotation d'azimut et d'un ou du décalage de couple d'azimut,
- un couple d'accélération de nacelle est calculé en fonction d'un changement de vitesse de rotation d'azimut et d'un couple d'inertie de masse de la nacelle,
- en fonction d'une différence entre le couple d'azimut de nacelle et le couple d'accélération de nacelle, un couple d'entraînement d'azimut est déterminé, dans lequel
- le couple d'entraînement d'azimut, ou une grandeur représentative, en particulier proportionnelle, forme une grandeur de départ du modèle de l'observateur d'état, et en particulier
- deux des défauts d'alignement de pale, le décalage de couple d'azimut et le couple d'azimut, forment des états de système du modèle.

9. Procédé selon l'une quelconque des revendications précédentes, **caractérisé en ce que**
l'observateur d'état repose sur une description de modèle qui peut être décrite par le système d'équation suivant, dans lequel le rotor présente trois pales de rotor A, B et C : ${M}_{aero , A} = f \left({v}_{w},{n}_{R ,}α,{γ}_{A}\right) ; {M}_{aero , B} = f \left({v}_{w},{n}_{R ,}α,{γ}_{B}\right) ; {M}_{aero , C} = f \left({v}_{w},{n}_{R ,}α,{γ}_{C}\right) ;$ ${M}_{yaw , A} = f \left({M}_{aero , A , φ}\right) ; {M}_{yaw , B} = f \left({M}_{aero , B , φ}\right) ; {M}_{yaw , C} = f \left({M}_{aero , C , φ}\right)$ ${γ}_{c} = - {γ}_{A} - {γ}_{B}$ ${M}_{yaw , Nac} = {M}_{yaw , A} + {M}_{yaw , B} + {M}_{yaw , C} + {M}_{yaw , off}$ ${M}_{acc} = {i}_{g} . 2 π \frac{{dn}_{DRV}}{dt} . {J}_{Nac}$ ${M}_{DRV} = \frac{1}{{i}_{g}} . \left({M}_{yaw , Nac}-{M}_{acc}\right)$
avec
*M_{aero,A}, M_{aero,B}* et *M_{aero,c}* : couple de rotation de pale aérodynamique Mₐₑᵣₒ de la pale de rotor A, B ou C ;
*v_{w}* : vitesse du vent ; *n_{R}* : vitesse de rotation de rotor; α : angle de pale ; *φ* : angle de rotor
*M_{yaw,A}, M_{yaw,B}* et *M_{yaw,C} :* composant de couple de rotation d'azimut de la pale de rotor A, B et/ou C ;
*γ_{A}, γ_{B}* et γ_{C} : mauvaise position de pale de la pale de rotor A, B et/ou C ;
*M_{yaw,off} :* décalage de couple d'azimut ;
*M_{yaw, Nac}* : couple d'azimut de nacelle ;
*M_{acc} :* couple d'accélération de nacelle ; ${M}_{acc} = {i}_{g} ⋅ 2 π \frac{{dn}_{DRV}}{dt} ⋅ {J}_{Nac} ;$
*i_{g} :* rapport de démultiplication entre le moteur d'azimut et la nacelle ;
n_{DRV} : vitesse de rotation moteur d'azimut ;
*J_{Nac}* : couple d'inertie de masse nacelle
*M_{DRV} :* couple de moteur moteur d'azimut.

10. Procédé de correction d'au moins un défaut d'alignement de pale d'une pale de rotor d'un rotor d'une éolienne avec plusieurs pales de rotor à angle de pale ajustable, dans lequel
- le défaut d'alignement de pale décrit un écart d'angle de pale d'un angle de pale détecté de la pale de rotor par rapport à un angle de pale de référence,
- l'éolienne présente une nacelle avec le rotor et un dispositif d'ajustement d'azimut pour ajuster la nacelle dans une orientation d'azimut présentant un angle d'azimut, et
- pour l'ajustement de l'orientation d'azimut, l'angle d'azimut suit un angle de consigne d'azimut pouvant être prédéfini au moyen du dispositif d'ajustement d'azimut,
- le défaut d'alignement de pale est détecté en fonction d'un mouvement d'azimut de la nacelle, à savoir avec un procédé selon l'une quelconque des revendications précédentes, et
- pour chaque pale de rotor
- un angle de correction est déterminé en fonction de la mauvaise position de pale respectivement détectée et
- l'angle de pale est corrigé de l'angle de correction, et/ou
- une mauvaise position de pale détectée est comparée à une valeur limite d'écart pouvant être prédéfinie et un message d'erreur ou d'avertissement est généré lorsque la mauvaise position de pale détectée présente une valeur supérieure à la valeur limite d'écart.

11. Procédé selon la revendication 10, **caractérisé en ce que**
- l'angle de correction correspond à la mauvaise position de pale détectée, ou
- l'angle de correction suit la mauvaise position de pale détectée, en particulier avec une fonction de temporisation qui présente en particulier une constante de temps d'au moins une heure.

12. Eolienne (100) avec un rotor (106) avec plusieurs pales de rotor (108) à angle de pale ajustable, dans laquelle
- l'éolienne présente une nacelle (104) avec le rotor et un dispositif d'ajustement d'azimut pour ajuster la nacelle dans une orientation d'azimut présentant un angle d'azimut, et
- pour l'ajustement de l'orientation d'azimut, l'angle d'azimut suit un angle de consigne d'azimut pouvant être prédéfini au moyen du dispositif d'ajustement d'azimut, dans laquelle
- l'éolienne présente un dispositif de commande, qui est préparé pour exécuter un procédé selon l'une quelconque des revendications précédentes.
